# EUROPEAN PATENT APPLICATION

(11) **EP 4 840 904 A1**
(43) Date of publication of application: **18.11.2026**
(21) Application number: 25738943.7
(22) Date of filing: 14.01.2025
(51) Int. Cl.: C08L 53/02, B29C 48/12, B29C 64/314, B33Y 10/00, B33Y 70/10, B33Y 80/00, C08L 1/02, C08L 71/02

(54) **RESIN COMPOSITION**

(30) Priority: 12.01.2024 JP 2024003451; 12.01.2024 JP 2024003454
(71) Applicant: ASAHI KASEI KABUSHIKI KAISHA, Tokyo 100-0006 (JP)
(72) Inventor: SANDA, Takashi, Tokyo 100-0006 (JP); TANIMOTO, Kazuhiro, Tokyo 100-0006 (JP); MAEKAWA, Tomofumi, Tokyo 100-0006 (JP); KIMURA, Toshihiko, Tokyo 100-0006 (JP)
(74) Representative: D Young & Co LLP
(86) International application number: PCT/JP2025/000837
(87) International publication number: WO 2025/150576

(57) **Abstract**

The present invention provides, each as one embodiment: a resin composition capable of forming a resin molded body which has excellent tensile strength, tensile elastic modulus, and/or tensile elongation at break and in which impairments such as whitening and coloring hardly occur, while exhibiting advantageous properties inherent to a styrene-based elastomer (good rubber elasticity, weather resistance, chemical resistance, etc.); a method for producing the resin composition; and a molded body obtained by molding the resin composition. As one embodiment, provided is a resin composition which contains thermoplastic elastomers and cellulose nanofibers, and in which the thermoplastic elastomers include an acid-modified styrene-based elastomer and a styrene-based elastomer, and the amount of the thermoplastic elastomers is 60 mass% or more in 100 mass% of the resin composition.

## Description

### FIELD

The present invention relates to a resin composition comprising a styrene-based elastomer.

### BACKGROUND

Thermoplastic elastomers exhibit rubber elasticity while allowing melt molding by the same methods as thermoplastic resins, and they have therefore been used in the prior art for a wide range of purposes. Known thermoplastic elastomers include styrene-based, olefin-based, polyurethane-based, polyester-based, polyamide-based, acrylic and polyvinyl chloride-based types. Styrene-based elastomers have excellent weather resistance and chemical resistance, and are therefore used as sealing materials and as modifying agents and additives for a variety of materials.

Resin molded bodies must exhibit a high degree of balance between the desired properties including mechanical strength, flexibility, abrasion resistance and workability, depending on the purpose of their use, and it is common to add fillers to resin molded bodies in order to enhance their properties. With increasing awareness of environmental issues in recent years, many attempts have been made to utilize cellulose, a material with low specific gravity and renewability, as a filler in resin molded bodies. Cellulose nanofibers are considered very promising as a filler for resin molded bodies, because of their satisfactory reinforcing effect per usage amount in resin molded bodies, when combined with different resins to form resin molded bodies.

PTL 1 describes a resin composition comprising a polyamide, an elastomer and cellulose, wherein at least a portion of the elastomer has an acidic functional group, the polyamide and the elastomer are phase separated, and greater than 50 mass% of the cellulose is present in the polyamide phase.

PTL 2 describes a resin composition comprising a polyamide, one or more elastomers selected from the group consisting of aromatic vinyl compound-conjugated diene compound block copolymers and their derivatives, and cellulose, wherein the polyamide and the elastomer are in phase separation, and greater than 50 mass% of the cellulose is present in the polyamide phase.

### [CITATION LIST]

### [PATENT LITERATURE]

[PTL 1] Japanese Unexamined Patent Publication No. 2020-029488
[PTL 2] Japanese Unexamined Patent Publication No. 2022-007985

### SUMMARY

### [TECHNICAL PROBLEM]

Among resin molded bodies, those composed mainly of styrene-based elastomers are promising from the viewpoint of satisfactory rubber elasticity and excellent weather resistance and chemical resistance. By combining cellulose nanofibers with a styrene-based elastomer, it is possible to impart properties such as satisfactory tensile strength, tensile modulus and tensile breaking elongation, in addition to the original properties of the styrene-based elastomer. However, while styrene-based elastomers are inherently hydrophobic, cellulose nanofibers are inherently hydrophilic due to the presence of hydroxyl groups, and therefore mixing them tends to be difficult. If mixing between the styrene-based elastomer and cellulose nanofibers in the resin composition is poor, the molded article obtained by molding the resin composition will not exhibit the desired physical properties, and applying external force to the molded article will produce voids between the styrene-based elastomer and cellulose nanofibers, resulting in whitening of the molded article. If melt mixing of the styrene-based elastomer and cellulose nanofibers is carried out carefully to achieve more satisfactory mixing, on the other hand, heat degradation (such as coloration) of the cellulose nanofibers may occur. The technologies described in PTLs 1 and 2 allow the styrene-based elastomer to be present when the cellulose is dispersed in the polyamide, but they are not concerned with resin molded bodies composed mainly of styrene-based elastomers, and therefore do not deal with the aforementioned problems associated with combination of styrene-based elastomers and cellulose nanofibers.

It is an object of one aspect of the invention to solve this problem by providing a resin composition that exhibits the inherent advantageous properties of a styrene-based elastomer (satisfactory rubber elasticity, weather resistance and chemical resistance), while also having excellent tensile strength, tensile modulus and/or tensile breaking elongation, and allowing formation of a resin molded body with minimal inconveniences such as whitening and coloration, as well as a method of producing it, and a molded article obtained by molding the resin composition.

In order for a resin molded body comprising a filler to exhibit the desired properties it is often important for the filler to be satisfactorily dispersed in the resin. However, since cellulose is generally hydrophilic due to its hydroxyl groups, it has been proposed to use styrene-based elastomers as additives to promote satisfactory dispersion of cellulose in polymers.

Because styrene-based elastomers are soft and have excellent weather resistance and chemical resistance, it is desirable to obtain molded articles employing styrene-based elastomers as the main polymer components. However, there have conventionally been restrictions on the uses of resin molded bodies that use styrene-based elastomers as the main polymer components. Styrene-based elastomers generally exhibit tackiness (initial adhesion). Styrene-based elastomers have therefore been problematic in terms of workability and handleability, which has included difficulty in melt molding of the styrene-based elastomers alone, and tendency for molded styrene-based elastomers to stick to each other. The technology described in PTL 2 employs the aforementioned elastomer in a resin composition comprising a polyamide and cellulose to simultaneously achieve the conflicting properties of high toughness and low thermal expansion, but it has not been able to provide a molded article using a styrene-based elastomer as the main polymer component.

It is therefore an object of another aspect of the invention to solve this problem by providing a resin composition that can form a resin molded body exhibiting the inherent excellent properties of styrene-based elastomers (especially satisfactory rubber elasticity, weather resistance and chemical resistance), while also having excellent workability and handleability, as well as a method of producing it, and a resin molded body obtained by molding the resin composition.

### [SOLUTION TO PROBLEM]

Specifically, the present disclosure encompasses the following aspects.
[1] A resin composition comprising a thermoplastic elastomer and cellulose nanofibers, wherein:
   the thermoplastic elastomer comprises an acid-modified styrene-based elastomer and a styrene-based elastomer, and
   an amount of the thermoplastic elastomer is 60 mass% or greater in 100 mass% of the resin composition.
[2] A resin composition comprising a thermoplastic elastomer and cellulose nanofibers, wherein:
   a number-average aspect ratio, as a ratio L/D of a number-average fiber length L and a number-average fiber diameter D of the cellulose nanofibers in the resin composition, is 2 to 26, and
   an amount of the thermoplastic elastomer is 60 mass% or greater in 100 mass% of the resin composition.
[3] A resin composition comprising a thermoplastic elastomer and cellulose nanofibers, wherein
   when the cellulose nanofibers are separated from the resin composition using tetrahydrofuran (THF), an weight increase rate of the cellulose nanofibers is 190% to 600%, and
   an amount of the thermoplastic elastomer is 60 mass% or greater in 100 mass% of the resin composition.
[4] The resin composition according to any one of [1] to [3], wherein:
   the resin composition comprises an acid-modified styrene-based elastomer and a styrene-based elastomer as the thermoplastic elastomer, and
   a total amount of the acid-modified styrene-based elastomer and the styrene-based elastomer is 60 mass% or greater in 100 mass% of the resin composition.
[5] The resin composition according to any one of [1] to [4], wherein:
   the resin composition comprises an acid-modified styrene-based elastomer and a styrene-based elastomer as the thermoplastic elastomer, and
   the acid-modified styrene-based elastomer and the styrene-based elastomer are mutually miscible.
[6] The resin composition according to any one of [1] to [5], wherein:
   the resin composition comprises an acid-modified styrene-based elastomer and a styrene-based elastomer as the thermoplastic elastomer, and
   an amount of the acid-modified styrene-based elastomer is 0.5 parts by mass to 50 parts by mass with respect to 100 parts by mass of the styrene-based elastomer.
[7] The resin composition according to any one of [1] to [6], wherein:
   the resin composition comprises a styrene-based elastomer as the thermoplastic elastomer,
      and
   an amount of the styrene-based elastomer is 0.5 parts by mass to 250 parts by mass with respect to 1 part by mass of the cellulose nanofibers.
[8] The resin composition according to any one of [1] to [7], wherein:
   the resin composition comprises an acid-modified styrene-based elastomer as the thermoplastic elastomer, and
   an amount of the acid-modified styrene-based elastomer is 0.5 parts by mass to 45 parts by mass with respect to 1 part by mass of the cellulose nanofibers.
[9] The resin composition according to any one of [1] to [8], wherein:
   the resin composition comprises an acid-modified styrene-based elastomer as the thermoplastic elastomer, and
   an amount of the acid-modified styrene-based elastomer is 0.5 mass% to 50 mass% in 100 mass% of the resin composition.
[10] The resin composition according to any one of [1] to [9], wherein:
   the resin composition comprises a styrene-based elastomer as the thermoplastic elastomer,
      and
   an amount of the styrene-based elastomer is 10 mass% to 98.8 mass% in 100 mass% of the resin composition.
[11] The resin composition according to any one of [1] to [10], which comprises the cellulose nanofibers at 0.1 mass% to 20 mass%.
[12] The resin composition according to any one of [1] to [11], wherein:
   the resin composition comprises an acid-modified styrene-based elastomer as the thermoplastic elastomer, and
   a degree of acid modification of the acid-modified styrene-based elastomer is 0.2 mass% to 2.5 mass%.
[13] The resin composition according to any one of [1] to [12], wherein:
   the resin composition comprises a styrene-based elastomer as the thermoplastic elastomer,
      and
   the styrene-based elastomer is unmodified.
[14] The resin composition according to any one of [1] to [13], wherein:
   the resin composition comprises an acid-modified styrene-based elastomer as the thermoplastic elastomer, and
   the acid-modified styrene-based elastomer is an acid-modified form of a styrene-based elastomer which is an aromatic vinyl compound-conjugated diene compound block copolymer or its hydrogenated form.
[15] The resin composition according to any one of [1] to [14], wherein:
   the resin composition comprises a styrene-based elastomer as the thermoplastic elastomer,
      and
   the styrene-based elastomer is an aromatic vinyl compound-conjugated diene compound block copolymer or its hydrogenated form.
[16] The resin composition according to any one of [1] to [15], wherein:
   the resin composition comprises a styrene-based elastomer as the thermoplastic elastomer,
      and
   a melt mass-flow rate of the styrene-based elastomer at 230°C, 2.16 kg is 20 g/10 min or lower.
[17] The resin composition according to any one of [1] to [16], wherein:
   the resin composition comprises an acid-modified styrene-based elastomer as the thermoplastic elastomer, and
   a styrene unit ratio of the acid-modified styrene-based elastomer is 10 mass% to 45 mass%.
[18] The resin composition according to any one of [1] to [17], wherein:
   the resin composition comprises a styrene-based elastomer as the thermoplastic elastomer,
      and
   a styrene unit ratio of the styrene-based elastomer is 10 mass% to 45 mass%.
[19] The resin composition according to any one of [1] to [18], wherein:
   the resin composition comprises an acid-modified styrene-based elastomer and a styrene-based elastomer as the thermoplastic elastomer, and
   a ratio of a styrene unit ratio of the styrene-based elastomer with respect to a styrene unit ratio of the acid-modified styrene-based elastomer (styrene ratio of styrene-based elastomer/styrene ratio of acid-modified styrene-based elastomer) is 0.3 to 2.5.
[20] The resin composition according to any one of [1] to [19], wherein:
   the resin composition comprises an acid-modified styrene-based elastomer and a styrene-based elastomer as the thermoplastic elastomer, and
   a number-average molecular weight of the acid-modified styrene-based elastomer is 10,000 to 500,000, and a number-average molecular weight of the styrene-based elastomer is 10,000 to 500,000.
[21] The resin composition according to any one of [1] to [20], wherein:
   the resin composition comprises an acid-modified styrene-based elastomer as the thermoplastic elastomer, and
   a ratio of a styrene unit ratio with respect to a degree of acid modification (styrene unit ratio/degree of acid modification) for the acid-modified styrene-based elastomer is 5 to 90.
[22] The resin composition according to any one of [1] to [21], wherein:
   the resin composition comprises an acid-modified styrene-based elastomer as the thermoplastic elastomer, and
   an amount of acid-modified groups of the acid-modified styrene-based elastomer is 0.2 mass% to 5.0 mass% with respect to 100 mass% of the cellulose nanofibers.
[23] The resin composition according to any one of [1] to [22], wherein a number-average fiber diameter of the cellulose nanofibers is 2 nm to 1000 nm.
[24] The resin composition according to any one of [1] to [23], wherein a thermal decomposition initiation temperature of the cellulose nanofibers is 250°C or higher.
[25] The resin composition according to any one of [1] to [24], wherein a specific surface area of the cellulose nanofibers is 10 m²/g to 200 m²/g.
[26] The resin composition according to any one of [1] to [25], which further comprises a polyoxyethylene unit-containing polymer.
[27] The resin composition according to any one of [1] to [26], which further comprises a liquid polymer.
[28] A method of producing the resin composition according to any one of [1] to [27], wherein:
   the resin composition comprises an acid-modified styrene-based elastomer and a styrene-based elastomer as the thermoplastic elastomer, and
   the method comprises heat-kneading a mixture comprising the acid-modified styrene-based elastomer, the styrene-based elastomer and the cellulose nanofibers.
[29] The method according to [28], wherein an weight increase rate of the cellulose nanofibers after heat-kneading with respect to the cellulose nanofibers before heat-kneading is 190% to 600%.
[30] A resin molded body obtained by molding the resin composition according to any one of [1] to [27].
[31] The resin molded body according to [30], which is a profile extrusion molded article.
[32] A method of producing a profile extrusion molded article,
   the method comprising a step of profile-extruding the resin composition according to any one of [1] to [27].
[33] A forming material for 3D printing, which is composed of the resin composition according to any one of [1] to [27].
[34] The forming material for 3D printing according to [33], which has a filament or powder form.
[35] A formed article obtained by forming the resin composition according to any one of [1] to [27] using a 3D printer.
[36] A formed article obtained by forming the forming material for 3D printing according to [33] or [34] using a 3D printer.
[37] A method of producing a formed article,
   the method comprising a step of forming the resin composition according to any one of [1] to [27] using a 3D printer.
[38] A method of producing a formed article,
   the method comprising a step of forming the forming material for 3D printing according to [33] or [34] using a 3D printer.
[39] A resin composition comprising a styrene-based elastomer and a tack inhibitor that comprises cellulose nanofibers.

### [ADVANTAGEOUS EFFECTS OF INVENTION]

According to one aspect of the invention it is possible to provide a resin composition that exhibits the inherent advantageous properties of a styrene-based elastomer (satisfactory rubber elasticity, weather resistance and chemical resistance), while also having excellent tensile strength, tensile modulus and/or tensile breaking elongation, and allowing formation of a resin molded body with minimal inconveniences such as whitening and coloration, as well as a method of producing it, and a molded article obtained by molding the resin composition.

According to another aspect of the invention it is possible to provide a resin composition that can form a resin molded body exhibiting the inherent excellent properties of styrene-based elastomers (especially satisfactory rubber elasticity, weather resistance and chemical resistance), while also having excellent workability and handleability, as well as a method of producing it, and a resin molded body obtained by molding the resin composition.

### DESCRIPTION OF EMBODIMENTS

Exemplary embodiments of the invention (hereunder also referred to as "embodiments") will now be described, with the understanding that the invention is not limited to these embodiments and may incorporate various modifications such as are within the scope of the gist thereof.

### <Resin composition>

One aspect of the invention provides a resin composition comprising a thermoplastic elastomer and cellulose nanofibers. According to one aspect, the amount of thermoplastic elastomer is 60 mass% or greater in 100 mass% of the resin composition. According to one aspect, the thermoplastic elastomer comprises a styrene-based elastomer, according to another aspect it comprises an acid-modified styrene-based elastomer, according to another aspect it comprises a styrene-based elastomer and an acid-modified styrene-based elastomer, and according to yet another aspect it consists of a styrene-based elastomer and an acid-modified styrene-based elastomer.

According to one aspect, the number-average aspect ratio, which is the ratio L/D between the number-average fiber length L and the number-average fiber diameter D of the cellulose nanofibers in the resin composition, is 2 to 26.

According to one aspect, the weight increase rate of the cellulose nanofibers is 190% to 600%, when the cellulose nanofibers have been separated from the resin composition using tetrahydrofuran (THF).

One aspect of the invention provides a resin composition comprising an acid-modified styrene-based elastomer, a styrene-based elastomer and cellulose nanofibers. In a resin composition according to one aspect, the acid-modified styrene-based elastomer and styrene-based elastomer are compatibilized without phase separation, and are in a continuous phase. According to one aspect, the total amount of the acid-modified styrene-based elastomer and styrene-based elastomer is 60 mass% or greater in 100 mass% of the resin composition. The styrene-based elastomer portion in the resin composition contributes to the inherent satisfactory properties exhibited by the styrene-based elastomer, while the acid-modified styrene-based elastomer portion in the resin composition lies between the styrene-based elastomer and cellulose nanofibers due to satisfactory affinity with both the styrene-based elastomer and cellulose nanofibers, thereby contributing to fewer inconveniences that are caused by poor affinity (for example, formation of voids when the materials become detached).

It was found that the presence of cellulose nanofibers and an acid-modified styrene-based elastomer in the resin composition according to one aspect can reduce fuzzing during extrusion molding. This allows the molded article to exhibit satisfactory surface smoothness. While the reason why the cellulose nanofibers and the acid-modified styrene-based elastomer produce an excellent effect of reducing fuzzing is not completely understood, since the cellulose nanofibers and the acid-modified styrene-based elastomer bond by reaction, this may potentially exhibit a smoothing effect by modifying the surface of the styrene-based elastomer during molding. Addition of cellulose nanofibers to a styrene-based elastomer can also be advantageous for reducing shrinkage during molding and for improving the tensile strength, tensile modulus, tensile breaking elongation and/or hardness of the molded article. It has also been found that in a resin composition according to one aspect, the presence of an acid-modified styrene-based elastomer in addition to the cellulose nanofibers can further improve the tensile strength, tensile modulus, tensile breaking elongation and/or hardness of the molded article, while also reducing inconveniences such as whitening and coloration of the molded article. Without being limited to any particular theory, it is believed that reaction between the hydroxyl groups of the cellulose nanofibers and the acid-modified groups of the acid-modified styrene-based elastomer reinforces their interfaces, helping to prevent detachment between the styrene-based elastomer, cellulose nanofibers and acid-modified styrene-based elastomer when external force has been applied to the molded article, while also helping to prevent coloration caused by heat degradation of the cellulose nanofibers. Presumably, this satisfactorily exhibits an effect of improving the physical properties of the cellulose nanofibers, while also inhibiting generation of voids in the molded article caused by detachment and reducing whitening, and also inhibiting coloration of the cellulose nanofibers. The resin composition according to one aspect has excellent workability and handleability even when using a styrene-based elastomer with excellent rubber elasticity, weather resistance and chemical resistance, while also exhibiting a satisfactory improving effect on the physical properties due to the cellulose nanofibers and having minimal inconveniences such as whitening or coloration, and it is therefore suitable as a thermoplastic polyurethane elastomer (TPU) substitute, for example.

One aspect of the invention also provides a resin composition comprising a styrene-based elastomer and a tack inhibitor that comprises cellulose nanofibers. Styrene-based elastomers inherently have satisfactory rubber elasticity, weather resistance and chemical resistance, but their tackiness tends to hamper molding and impede handling of molded articles. For example, a molding material with tackiness is difficult to separate from the die during molding, and when strong force is applied to the molded article to attempt separation from the die, it can cause deformation or damage, making it difficult to obtain a satisfactory molded article. Moreover, when a molded article of tacky pellets, bales, injection molded compacts, films, sheets or filaments is placed in storage, the contact sections within the molded article become blocked, making it difficult to handle in subsequent steps. It was found that in a resin composition according to one aspect, the presence of the cellulose nanofibers reduces tackiness, thus facilitating molding itself as well as handling of the molded article. The cellulose nanofibers according to one aspect can function as a tack inhibitor either as the cellulose nanofibers alone or in cooperation with other components in the resin composition. While the reason why cellulose nanofibers have an excellent tack-reducing effect for styrene-based elastomers is not completely understood, it may be that the fine fibrous structure of the cellulose nanofibers helps to facilitate physical entanglement with the styrene-based elastomer compared to other fillers (such as silica particles, glass fibers or carbon fibers), so that a satisfactory tack-reducing effect is exhibited. Because cellulose nanofibers are softer than silica particles, glass fibers or carbon fibers, they are also advantageous in that the inherent rubber elasticity of the styrene-based elastomer is not impaired. Addition of cellulose nanofibers to a styrene-based elastomer can also be advantageous for reducing shrinkage during molding and for improving the tensile strength, tensile modulus, tensile breaking elongation and/or hardness of the molded article. The resin composition according to one aspect reduces tackiness and provides excellent workability and handleability even when using a styrene-based elastomer, and it is therefore useful as a soft resin molded body, and it is also suitable as a thermoplastic polyurethane elastomer (TPU) substitute, for example.

The resin composition according to one aspect has tack strength, as measured in a probe tack test at 23°C, a load of 600 gf, a pressing time of 60 seconds and a peel rate of 600 mm/min (hereunder also referred to simply as "tack strength"), of 10.0 gf/mm² or lower. According to one aspect, the tack strength may be 9.0 gf/mm² or lower, 7.0 gf/mm² or lower, 5.0 gf/mm² or lower, 3.0 gf/mm² or lower, 2.0 gf/mm² or lower, 1.5 gf/mm² or lower or 1.0 gf/mm² or lower. From the viewpoint of facilitating production of the resin composition, the tack strength may be 0.001 gf/mm² or higher, 0.01 gf/mm² or higher, 0.1 gf/mm² or higher, 0.3 gf/mm² or higher or 0.5 gf/mm² or higher, according to one aspect.

The tack strength of the resin composition according to one aspect is preferably 70% or lower, 60% or lower, 50% or lower, 40% or lower, 30% or lower, 25% or lower, 20% or lower, 15% or lower or 10% or lower with respect to 100% as the tack strength of a resin composition having the same composition but lacking cellulose nanofibers. The aforementioned ratio is preferably lower from the viewpoint of inhibiting tack, but according to one aspect it is 0.0001% or higher, 0.1% or higher, 1% or higher or 3% or higher from the viewpoint of facilitating production of the resin composition.

The tack strength of the resin composition according to one aspect is preferably in the ratio mentioned above with respect to 100% as the tack strength of the styrene-based elastomer in the resin composition.

Each of the components of the resin composition will now be explained. For this embodiment, the amounts of each of the components listed as values among the resin composition components may be considered to be the amounts of each of the components in the resin composition, and the amounts of each of the components listed as values in the resin composition may be considered to be the amounts of each of the components among the resin composition components.

### <Cellulose nanofibers>

Cellulose nanofibers are fibers that have been micronized by defibration treatment of a cellulose fiber starting material. The cellulose fiber starting material may be natural cellulose or regenerated cellulose. Natural cellulose includes wood pulp obtained from wood sources (broadleaf trees or conifers), nonwood pulp obtained from non-wood sources (cotton, bamboo, hemp, bagasse, kenaf, cotton linter, sisal and straw), and cellulose fiber aggregates obtained from sources such as animals (such as sea squirts) and algae, or produced by microbes (such as acetic acid bacteria). Regenerated cellulose to be used may be regenerated cellulose fibers (such as viscose, cupra and Tencel), cellulose derivative fibers, or superfine yarn of regenerated cellulose or cellulose derivatives, obtained by electrospinning methods. A cellulose fiber starting material that provides cellulose nanofibers with fuzzing on the surface is sometimes advantageous for a tack-inhibiting effect. Cotton linter is a preferred cellulose fiber starting material from this viewpoint.

According to one aspect, the defibration is dry or wet mechanical treatment, and preferably it is wet treatment in which a slurry obtained by dispersing the cellulose fiber starting material in a liquid medium is subjected to mechanical treatment. The defibration may be carried out using a single apparatus one or more times, or a plurality of apparatuses, each one or more times. The apparatus used for defibration is not particularly restricted, and for example, it may be a high-speed rotation type, colloid mill type, high-pressure type, roll mill type or ultrasonic type of apparatus, such as a high-pressure or ultrahigh-pressure homogenizer, refiner, beater, PFI mill, kneader, disperser, high-speed defibrator, grinder (stone mill crusher), ball mill, vibrating mill, bead mill, conical refiner, disc refiner, or a single-screw, twin-screw or multi-screw kneader or extruder.

The cellulose fiber starting material may also be supplied to pretreatment before defibration. Pretreatment can accomplish adjustment of the fiber diameter, fiber length and fibrillation degree, or adjustment of the contents of components other than cellulose (including acid-insoluble components such as lignin and alkali-soluble polysaccharides such as hemicellulose), or adjustment of the molecular weight and degree of crystallinity.

According to one aspect, the pretreatment may be of one or more types selected from among chemical treatment, pulverizing, grinding and classification. Chemical treatment is treatment using chemicals, examples of which include digestion, bleaching, purification, hydrolysis, enzymatic treatment, regenerated cellulose treatment and chemical modification. Pulverizing is treatment in which the cellulose fiber starting material is pulverized in a dry system. Grinding is treatment in which a slurry obtained by dispersing the cellulose fiber starting material in a liquid medium is subjected to pulverizing treatment, being distinguished from pulverizing in that it is carried out in a wet system. Classification is a separation procedure for alignment of the fiber lengths of a cellulose fiber starting material, and it may be dry classification or wet classification.

The liquid medium may be water and/or another medium (for example, an organic solvent, inorganic acid, base and/or ionic liquid), and it may include one or more different media.

Examples of organic solvents include one or more commonly used organic solvents from among: alcohols (such as methanol, ethanol, n-propanol, i-propanol, n-butanol, i-butanol, s-butanol, t-butanol, ethylene glycol, diethylene glycol and glycerin); ethers (such as propyleneglycol monomethyl ether, 1,2-dimethoxyethane, diisopropyl ether, tetrahydrofuran and 1,4-dioxane); carboxylic acids (such as formic acid, acetic acid and lactic acid); esters (such as ethyl acetate and vinyl acetate); ketones (such as acetone, methyl ethyl ketone, methyl isobutyl ketone, cyclopentanone and cyclohexanone); nitrogen-containing solvents (such as dimethylformamide, dimethylacetamide and acetonitrile); and sulfur-containing solvents (such as dimethyl sulfoxide). According to a typical aspect, the liquid medium in the slurry is substantially only water.

According to one aspect, the number-average fiber length L of the cellulose nanofibers is preferably 100 nm or larger, 500 nm or larger, 1 µm or larger, 5 µm or larger, 10 µm or larger or 20 µm or larger, from the viewpoint of satisfactorily exhibiting an effect of improvement in physical properties by the cellulose nanofibers, and preferably 1000 µm or smaller, 800 µm or smaller, 500 µm or smaller, 400 µm or smaller, 300 µm or smaller or 200 µm or smaller, from the viewpoint of satisfactorily dispersing the cellulose nanofibers in the resin composition.

According to one aspect, the number-average fiber diameter D of the cellulose nanofibers is preferably 2 to 1000 nm from the viewpoint of obtaining a satisfactory effect of improving the physical properties by the cellulose nanofibers. The number-average fiber diameter of the cellulose nanofibers is more preferably 4 nm or greater, 5 nm or greater, 10 nm or greater, 15 nm or greater or 20 nm or greater, and more preferably 900 nm or smaller, 800 nm or smaller, 700 nm or smaller, 600 nm or smaller, 500 nm or smaller, 400 nm or smaller, 300 nm or smaller or 200 nm or smaller.

The mean fiber length (L)/fiber diameter (D) ratio of the cellulose nanofibers is preferably 30 or greater, 50 or greater, 80 or greater, 100 or greater, 120 or greater or 150 or greater, from the viewpoint of satisfactorily improving the mechanical properties of the rubber composite containing the cellulose nanofibers, using a small amount of cellulose nanofibers. The upper limit is not particularly restricted but is preferably 5000 or lower, 3000 or lower, 2000 or lower or 1000 or lower, from the viewpoint of handleability.

For the purpose of the disclosure, the fiber length, fiber diameter and L/D ratio of the cellulose nanofibers are the values measured by the following procedure using a scanning electron microscope (SEM). The aqueous dispersion of cellulose nanofibers is solvent-exchanged with tert-butanol, diluted to 0.001 to 0.1 mass%, and dispersed using a high-shear homogenizer (such as an "ULTRA-TURRAX T18", trade name of IKA Corp.) with treatment conditions of 15,000 rpm × 3 min, cast onto an osmium-vapor deposited silicon substrate and air-dried, and then dried for use as a measuring sample and measured with a high-resolution scanning electron microscope (SEM). Specifically, the length (L) and diameter (D) of 100 randomly selected cellulose nanofibers are measured in an observation field with the magnification adjusted so as to observe at least 100 cellulose nanofibers, and the ratio (L/D) is calculated. The number-average values are recorded as the number-average fiber diameter L and number-average fiber diameter D, and the ratio (L/D) is calculated.

The number-average aspect ratio, which is the ratio L/D between the number-average fiber length L and the number-average fiber diameter D of the cellulose nanofibers in the resin composition, is 2 to 26, according to one aspect. The upper limit for the aspect ratio is not particularly restricted but is preferably 25 or lower from the viewpoint of handleability. The lower limit for the aspect ratio is also not particularly restricted but is preferably 5 or higher, 10 or higher or 15 or higher. The aspect ratio is the value measured by the method described herein under [Examples].

The known crystalline forms of cellulose include type I, type II, type III and type IV, among which type I and type II are most commonly used, whereas type III and type IV are not commonly used on an industrial scale but have been obtained on a laboratory scale. The cellulose nanofibers of the disclosure are preferably cellulose nanofibers containing type I cellulose crystals or type II cellulose crystals, for relatively high mobility in terms of structure and to obtain a molded article with a lower coefficient of linear expansion and more excellent strength and elongation when subjected to stretching or bending deformation, by dispersion of the cellulose nanofibers in the rubber, and more preferably the cellulose nanofibers comprise type I cellulose crystals and have a degree of crystallinity of 55% or higher.

The degree of crystallinity of the cellulose nanofibers is preferably 55% or higher. A greater degree of crystallinity results in higher mechanical properties (strength and dimensional stability) of the cellulose itself, so that when the cellulose nanofibers are dispersed in rubber, the strength and dimensional stability of the rubber composite also tends to be high. A more preferred lower limit for the degree of crystallinity is 60%, preferably 70% and most preferably 80%. The upper limit for the degree of crystallinity of the cellulose nanofibers is not particularly restricted, and a higher degree is preferred, but from the viewpoint of productivity the preferred upper limit is 99%.

When the cellulose nanofibers are type I cellulose crystals (derived from natural cellulose), the degree of crystallinity referred to here is that determined by the following formula, from the diffraction pattern (20/deg. = 10 to 30) obtained by measurement of the sample by wide-angle X-ray diffraction, based on the Segal method. $Degree of crystallinity \left(%\right) = \left[{I}_{\left(200\right)}-{I}_{\left(amorphous\right)}\right] / {I}_{\left(200\right)} \times 100$
I₍₂₀₀₎: Diffraction peak intensity at 200 plane (2θ = 22.5°) for type I cellulose crystal
I₍ₐₘₒᵣₚₕₒᵤₛ₎: Amorphous halo peak intensity for type I cellulose crystal, peak intensity at angle of 4.5° lower than diffraction angle at 200 plane (2θ = 18.0°).

When the cellulose is type II cellulose crystals (derived from regenerated cellulose), the degree of crystallinity is determined by the following formula, from the absolute peak intensity h0 at 2θ = 12.6° attributed to the (110) plane peak of the type II cellulose crystals, and the peak intensity h1 of the baseline at the interplanar spacing (line connecting 2θ = 8° and 15°), in wide-angle X-ray diffraction. $Degree of crystallinity \left(%\right) = \left(h0-h1\right) / h 0 \times 100$

The degree of polymerization of the cellulose nanofibers is preferably 100 or greater, more preferably 150 or greater, even more preferably 200 or greater, yet more preferably 300 or greater, even yet more preferably 400 or greater, and most preferably 450 or greater, and preferably 3500 or lower, more preferably 3300 or lower, even more preferably 3200 or lower, yet more preferably 3100 or lower and most preferably 3000 or lower.

The degree of polymerization of the cellulose nanofibers is preferably within this range from the viewpoint of workability and mechanical properties. The degree of polymerization is preferably not too high from the viewpoint of workability, and it is preferably not too low from the viewpoint of exhibiting mechanical properties.

The degree of polymerization of the cellulose nanofibers is the mean polymerization degree measured by the reduced relative viscosity method using a copper-ethylenediamine solution, as described in Verification Test (3) of "Japanese Pharmacopeia, 15th Edition Reference Manual (Hirokawa Shoten)".

According to one aspect, the weight-average molecular weight (Mw) of the cellulose nanofibers is 100,000 or greater and preferably 200,000 or greater. The ratio (Mw/Mn) of the weight-average molecular weight and number-average molecular weight (Mn) is 6 or lower, and preferably 5.6 or lower or 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, it is not sufficient for the cellulose molecules of the cellulose nanofibers to merely have high weight-average molecular weight, but when a high weight-average molecular weight is combined with a more narrow width of the molecular weight distribution, it is possible to obtain especially high heat resistance for the cellulose nanofibers, as well as for a resin composition comprising the cellulose nanofibers. The weight-average molecular weight (Mw) of the cellulose nanofibers may be 600,000 or lower, 500,000 or lower, or 400,000 or lower, for example, from the viewpoint of greater availability of the cellulose starting material. The number-average molecular weight (Mn) of the cellulose nanofibers may be 200,000 or lower, 150,000 or lower, 100,000 or lower, 80,000 or lower or 60,000 or lower, for example, from the viewpoint of greater availability of the cellulose fiber starting material. The ratio (Mw/Mn) of the weight-average molecular weight and number-average molecular weight (Mn) may be 1.5 or higher, 1.7 or higher or 2 or higher, for example, from the viewpoint of easier production of the cellulose nanofibers. The Mw can be controlled to within this range by selecting a cellulose starting material having the desired Mw, or by carrying out appropriate physical treatment and/or chemical treatment of the cellulose starting material. The Mw/Mn ratio can also be controlled to within this range by selecting a cellulose starting material having the desired Mw/Mn ratio, or by carrying out appropriate physical treatment and/or chemical treatment of the cellulose starting material. The Mw and Mw/Mn of the cellulose starting material may be in the ranges specified above, according to one aspect.

The weight-average molecular weight and number-average molecular weight of the cellulose nanofibers referred to here are the values determined after dissolving the cellulose nanofibers in lithium chloride-added N,N-dimethylacetamide, and then performing gel permeation chromatography with N,N-dimethylacetamide as the solvent.

Alkali-soluble polysaccharides in the cellulose nanofibers include β-cellulose and γ-cellulose, in addition to hemicellulose. Alkali-soluble polysaccharides are understood by those skilled in the art to be the components that are obtained as the alkali-soluble portion of holocellulose (that is, the components other than α-cellulose in holocellulose), upon solvent extraction and chlorine treatment of a plant (such as wood). Since alkali-soluble polysaccharides are hydroxyl group-containing polysaccharides with poor heat resistance, which can lead to inconveniences such as decomposition when subjected to heat, yellowing due to heat aging and reduced strength of the cellulose nanofibers, it is preferred to have a lower alkali-soluble polysaccharide content in the cellulose nanofibers.

According to one aspect, the average content of alkali-soluble polysaccharides in the cellulose nanofibers is preferably 20 mass% or lower, 18 mass% or lower, 15 mass% or lower or 12 mass% or lower with respect to 100 mass% of the cellulose nanofibers, from the viewpoint of obtaining satisfactory dispersibility for the cellulose nanofibers. The content may also be 1 mass% or greater, 2 mass% or greater or 3 mass% or greater from the viewpoint of facilitating production of the cellulose nanofibers.

The average content of alkali-soluble polysaccharides can be determined by a method described in non-patent literature (Mokushitsu Kagaku Jikken Manual, ed. The Japan Wood Research Society, pp.92-97, 2000), subtracting the α-cellulose content from the holocellulose content (Wise method). In the technical field this method is understood to be a method of measuring hemicellulose content. The alkali-soluble polysaccharide content is calculated 3 times for each sample, and the number average for the calculated alkali-soluble polysaccharide contents is recorded as the average alkali-soluble polysaccharide content.

According to one aspect, the average content of the acid-insoluble component in the cellulose nanofibers is preferably 10 mass% or lower, 5 mass% or lower or 3 mass% or lower with respect to 100 mass% of the cellulose nanofibers, from the viewpoint of avoiding reduction in heat resistance and resulting discoloration of the cellulose nanofibers. The content may also be 0.1 mass% or greater, 0.2 mass% or greater or 0.3 mass% or greater from the viewpoint of facilitating production of the cellulose nanofibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is understood to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component. The acid-insoluble component content is measured 3 times for each sample, and the number average is recorded as the average content for the acid-insoluble component.

### [Chemical modification]

The cellulose nanofibers may be chemically modified cellulose nanofibers. Examples of chemically modified cellulose nanofibers include inorganic ester compounds such as nitric acid esters, sulfuric acid esters, phosphoric acid esters, silicic acid esters and boric acid esters, acetylated or propionylated organic ester compounds, etherified compounds such as methyl ethers, hydroxyethyl ethers, hydroxypropyl ethers, hydroxybutyl ethers, carboxymethyl ethers and cyanoethyl ethers, and TEMPO oxidation products obtained by oxidation of the primary hydroxyl group of cellulose. The chemically modified cellulose nanofibers may also comprise one or more modifying groups.

According to a preferred aspect, the chemical modification is acylation, and especially acetylation, using an esterifying agent. Preferred esterifying agents are acid halides, acid anhydrides, vinyl carboxylate esters and carboxylic acids. Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency. The cellulose nanofibers may be chemically modified with a modifying agent at the stage of the cellulose fiber starting material, during defibration treatment or after defibration treatment, for example, or they may be chemically modified as a dispersion, either during or after preparation of the slurry, or during or after the drying step.

### [Acyl group degree of substitution (DS)]

If the cellulose nanofibers are chemically modified (by hydrophobizing such as acylation, for example), the dispersibility of the cellulose nanofibers in the rubber will tend to be satisfactory. If this is combined with a dispersing agent, on the other hand, it will be easier to exhibit satisfactory dispersibility in rubber even when the cellulose nanofibers are unsubstituted or low-substituted. When the cellulose nanofibers are esterified cellulose nanofibers, the acyl group degree of substitution (DS) is preferably 0.1 or greater, 0.2 or greater, 0.25 or greater, 0.3 or greater or 0.5 or greater, from the viewpoint of obtaining esterified cellulose nanofibers with a high thermal decomposition initiation temperature, and the acyl group degree of substitution is preferably 2.0 or lower, 1.8 or lower, 1.5 or lower, 1.2 or lower, 1.0 or lower, 0.8 or lower, 0.7 or lower, 0.6 or lower or 0.5 or lower, from the viewpoint of obtaining esterified cellulose nanofibers exhibiting high tensile strength and dimensional stability provided by the cellulose, since the unmodified cellulose backbone remains in the esterified cellulose nanofibers, as well as a high thermal decomposition initiation temperature provided by the chemical modification.

When the modifying groups on the chemically modified cellulose nanofibers are acyl groups, the acyl group degree of substitution (DS) can be calculated based on the peak intensity ratio between the acyl group-derived peak and the cellulose backbone-derived peak, in the reflective infrared absorption spectrum of the esterified cellulose nanofibers. The peak of the absorption band for C=O based on acyl groups appears at 1730 cm⁻¹, while the peak of the absorption band for C-O based on the cellulose backbone chain appears at 1030 cm⁻¹. The DS of esterified cellulose nanofibers can be calculated by drawing a correlation graph between DS obtained from solid NMR measurement of the esterified cellulose nanofibers described below, and the modification rate (IR index 1030), defined by the ratio of the peak intensity of the absorption band for C=O based on acyl groups with respect to the peak intensity of the absorption band for C-O of the cellulose backbone chain, and using a calibration curve calculated from the correlation graph: $Degree of substitution DS = 4.13 \times IR index \left(1030\right) .$ $IR Index \left(1030\right) = H 1730 / H 1030$ In the formula, H1730 and H1030 are the absorbances at 1730 cm⁻¹ and 1030 cm⁻¹ (absorption bands for C-O stretching vibration of the cellulose backbone chain). The respective baselines used were a line connecting 1900 cm⁻¹ and 1500 cm⁻¹ and a line connecting 800 cm⁻¹ and 1500 cm⁻¹, each baseline being defined as the absorbance at absorbance = 0.

The method of determining DS for the esterified cellulose nanofibers by solid-state NMR may be ¹³C solid-state NMR measurement of the freeze-shattered esterified cellulose nanofibers, followed by calculation of the value obtained by the following formula using the area intensity (Inf) of the signal attributed to one carbon atom of the modifying group, with respect to the total area intensity (Inp) of the signals attributed to C₁-C₆ carbons of the pyranose rings of cellulose, appearing in the range of 50 ppm to 110 ppm. $DS = \left(Inf\right) \times 6 / \left(Inp\right)$

When the modifying group is acetyl, for example, the signal at 23 ppm attributed to -CH₃ may be used.

The conditions for the ¹³C solid-state NMR measurement may be the following, as an example.
Apparatus: Bruker Biospin Avance 500WB
Frequency: 125.77 MHz
Measuring method: DD/MAS
Latency time: 75 sec
NMR sample tube: 4 mmφ
Number of scans: 640 (~14 hr)
MAS: 14,500 Hz
Chemical shift reference: glycine (external reference: 176.03 ppm)

According to one aspect, the thermal decomposition initiation temperature (T_{D}) of the cellulose nanofibers is preferably 200°C or higher, 210°C or higher, 220°C or higher, 230°C or higher, 240°C or higher, 250°C or higher, 260°C or higher, 270°C or higher, 275°C or higher, 280°C or higher or 285°C or higher, from the viewpoint of allowing the desired heat resistance and mechanical strength to be exhibited for on-vehicle purposes. While a higher thermal decomposition initiation temperature is preferred, it is also 320°C or lower, 310°C or lower or 300°C or lower from the viewpoint of easier production of the cellulose nanofibers.

### [1% weight loss temperature (T_{1%}) and 250°C weight loss (T_{250°C})]

The temperature at 1 wt% weight loss (T_{1%}) of the cellulose nanofibers is preferably 230°C or higher, 240°C or higher, 250°C or higher, 260°C or higher, 270°C or higher, 275°C or higher, 280°C or higher, 285°C or higher or 290°C or higher, according to one aspect, from the viewpoint of avoiding heat degradation during melt kneading and shaping and allowing mechanical strength to be exhibited. While a higher T_{1%} is preferred, it is also 330°C or lower, 320°C or lower or 310°C or lower, from the viewpoint of easier production of the cellulose nanofibers.

According to one aspect, the 250°C weight loss (T_{250°C}) of the cellulose nanofibers is preferably 15% or lower, 12% or lower, 10% or lower, 8% or lower, 6% or lower, 5% or lower, 4% or lower or 3% or lower, from the viewpoint of avoiding heat degradation during melt kneading and allowing mechanical strength to be exhibited. While a lower T_{250°C} is preferred, it may be 0.1% or higher, 0.5% or higher, 0.7% or higher or 1.0% or higher, for example, from the viewpoint of easier production of the cellulose nanofibers.

For the purpose of the disclosure, the T_{D} is the value determined from a graph obtained by thermogravimetry (TG) analysis, where the abscissa is temperature and the ordinate is weight retention %. Starting from the weight of cellulose nanofibers at 150°C (with essentially all of the moisture content removed) (0 wt% weight loss ) and increasing the temperature, a straight line is obtained running through the temperature at 1 wt% weight loss (T_{1%}) and the temperature at 2 wt% weight loss (T_{2%}). The temperature at the point of intersection between this straight line and a horizontal (baseline) running through the origin at weight loss 0 wt%, is defined as T_{D}.

The 1% weight loss temperature (T_{1%}) is the temperature at 1 wt% weight loss with the 150°C weight as the origin, after continuous temperature increase by the method for T_{D} described above.

The 250°C weight loss (T_{250°C}) of the cellulose nanofibers is the weight loss by TG analysis when the cellulose nanofibers have been stored for 2 hours at 250°C under a nitrogen flow. After increasing the temperature of a porous sheet of the cellulose nanofibers from room temperature to 150°C at a temperature-elevating rate of 10°C/min under a nitrogen flow of 100 ml/min and holding this state at 150°C for 1 hour, the temperature is further increased from 150°C to 250°C at a temperature-elevating rate of 10°C/min, and held in that state at 250°C for 2 hours. Calculation is by the following formula using the weight upon reaching 250°C as the starting point WO, and the weight after holding at 250°C for 2 hours as W1. $250 ° C Weight change rate \left(%\right) : \left(W1-W0\right) / W 0 \times 100$

### [Porous sheet]

Measurement of the physical properties of the cellulose nanofibers (degree of crystallinity, crystal polymorphism, polymerization degree, Mw, Mn and Mw/Mn, alkali-soluble portion content, average content of acid-insoluble components, T_{D}, T_{1%} and T_{250°C}) may vary significantly in their numerical values, depending on the form of the measuring sample. A porous sheet without distortion was used as the measuring sample for more stable reproducibility of measurement. The method of fabricating the porous sheet is as follows.

First, a concentrated cake of cellulose nanofibers with a solid content of 10 mass% or greater is added to tert-butanol, and further subjected to dispersion treatment with a mixer until disappearance of the aggregates. The mixture is then prepared to a concentration of 0.5 mass% for 0.5 g of cellulose nanofiber solid weight. A 100 g portion of the obtained tert-butanol dispersion is filtered on filter paper. Without being released from the filter paper, the filtered substance together with the filter paper is sandwiched by two larger filter paper sheets, and dried for 5 minutes in an oven at 150°C while pressing the edges of the larger filter paper with a weight from above. The filter paper is then released to obtain a porous sheet without distortion. Sheets with air permeability resistance R up to 100 sec/100 ml per 10 g/m² basis weight of the sheet are considered to be porous sheets, and are used as measuring samples.

For measurement of the air permeability resistance R, the basis weight W (g/m²) of each porous sheet sample that has been left to stand for 1 day in an environment of 23°C, 50% RH is measured, and then an Oken-type air permeability resistance tester (Model EG01 by Asahi Seiko Co., Ltd.) is used to measure the air permeability resistance R (sec/100 ml). The value per 10 g/m² basis weight is calculated by the following formula. $Air permeability resistance \left(sec/100 ml\right) per 10 {g / m}^{2} basis weight = R / W \times 10$

### [Specific surface area]

The specific surface area of the cellulose nanofibers is preferably 10 m²/g or greater, 15 m²/g or greater, 20 m²/g or greater, 30 m²/g or greater, 40 m²/g or greater or 50 m²/g or greater, from the viewpoint of a satisfactory color tone for the resin composition due to the highly micronized cellulose nanofibers and a satisfactory effect of reducing tackiness of the styrene-based elastomer, while from the viewpoint of easier production and handling of the cellulose nanofibers, it is preferably 200 m²/g or lower, 170 m²/g or lower or 160 m²/g or lower. The specific surface area is determined as the BET specific surface area (m²/g), calculated using the program of a specific surface area/pore distribution measuring apparatus (such as a Nova-4200e, by Quantachrome Instruments), after drying approximately 0.2 g of the sample for 5 hours in a vacuum at 120°C and then measuring the nitrogen gas adsorption at the boiling point of liquid nitrogen at five points (multipoint method) in a relative vapor pressure (P/P₀) range of 0.05 to 0.2.

The specific surface area of the cellulose nanofibers is preferably 10 m²/g or greater, 15 m²/g or greater, 20 m²/g or greater, 30 m²/g or greater, 40 m²/g or greater or 50 m²/g or greater, from the viewpoint of satisfactory transparency of the resin composition due to the highly micronized cellulose nanofibers, while from the viewpoint of easier production and handling of the cellulose nanofibers, it is preferably 200 m²/g or lower, 170 m²/g or lower or 160 m²/g or lower. This range is particularly preferred when using a tack inhibitor comprising cellulose nanofibers. Cellulose nanofibers with a relatively large specific surface area are sometimes advantageous for the tack-inhibiting effect. From this viewpoint, the specific surface area range is 10 m²/g or greater, 20 m²/g or greater or 30 m²/g or greater.

The physical properties of the cellulose nanofibers in the resin composition (the number-average fiber length, number-average fiber diameter, L/D ratio, degree of crystallinity, crystal polymorphism, polymerization degree, Mw, Mn, Mw/Mn, alkali-soluble portion content, average content of acid-insoluble components, T_{D}, T_{1%}, T_{250°C}, DS and specific surface area) are analyzed by the following methods.

The polymer component in the resin composition is dissolved in an organic or inorganic solvent capable of dissolving the polymer component, the cellulose nanofibers are separated off and thoroughly washed with the solvent, and then the solvent is exchanged with tert-butanol. The tert-butanol slurry of the cellulose nanofibers is then analyzed by the same measuring methods described above, and the physical properties of the cellulose nanofibers in the resin composition are calculated.

From the viewpoint of interfacial strength between the resin and cellulose nanofibers, the weight increase rate of the cellulose nanofibers when the cellulose nanofibers have been separated from the resin composition using THF is preferably 190% or higher, 250% or higher, 300% or higher or 350% or higher, while from the viewpoint of inhibiting staple fiber formation during kneading it is preferably 600% or lower, 550% or lower or 500% or lower. The weight increase rate is the value measured by the method described herein under [Examples].

According to one aspect, the cellulose nanofibers may be supplied in the form of a slurry comprising a liquid medium, or in a dried form such as particles, a film or bulk. The liquid medium may be water and/or an organic solvent with a boiling point, and it may comprise one or more different media. The slurry form has a liquid medium content of 50 mass% or greater, and a liquid medium content of less than 50 mass% in the dried material. The liquid medium content is the value measured upon heating at 180°C using an infrared heating moisture meter (for example, an "MX-50", trade name of A&D Co., Ltd.). For a mode using a tack inhibitor comprising cellulose nanofibers, the cellulose nanofibers mixed with the styrene-based elastomer are preferably in the form of a dried body from the viewpoint of more satisfactorily obtaining a tack-inhibiting effect.

From the viewpoint of satisfactorily obtaining the advantages of the cellulose nanofibers, the amount of cellulose nanofibers in 100 mass% of the resin composition is preferably 0.1 mass% or greater, 0.3 mass% or greater, 0.4 mass% or greater, 0.5 mass% or greater, 0.7 mass% or greater or 1.0 mass% or greater, while from the viewpoint of impact resistance of the resin composition it is preferably 20 mass% or less, 15 mass% or less or 10 mass% or less. For a mode using a tack inhibitor comprising cellulose nanofibers, the amount of cellulose nanofibers is most preferably 0.5 mass% or greater, 0.7 mass% or greater or 1.0 mass% or greater from the viewpoint of satisfactorily exhibiting a tack-inhibiting effect.

### <Thermoplastic elastomer>

According to one aspect, the thermoplastic elastomer comprises a styrene-based elastomer, according to another aspect it comprises an acid-modified styrene-based elastomer, according to another aspect it comprises a styrene-based elastomer and an acid-modified styrene-based elastomer, and according to yet another aspect it is of a styrene-based elastomer and an acid-modified styrene-based elastomer. Throughout the disclosure, according to one aspect, "elastomer" means a substance (specifically, a natural or synthetic polymer substance) that is an elastic solid at room temperature (23°C). According to one aspect, "elastic solid" means that the storage modulus at 23°C, 10 Hz, measured based on dynamic viscoelasticity, is 1 MPa to 100 MPa. Examples of elastomers that may comprise a thermoplastic elastomer in addition to the styrene-based elastomer and acid-modified styrene-based elastomer include one or more selected from among natural rubber, conjugated diene compound polymers, aromatic compound-conjugated diene copolymers, hydrogenated aromatic compound-conjugated diene copolymers, polyolefins, polyester-based elastomers, polyurethane-based elastomers, polyamide-based elastomers and elastomers having a core-shell structure. From the viewpoint of flexibility, the amount of thermoplastic elastomer in 100 mass% of the resin composition is preferably 10 mass% or greater, 30 mass% or greater, 50 mass% or greater, 60 mass% or greater, 70 mass% or greater or 80 mass% or greater, while from the viewpoint of comprising the desired amounts of the other components, it is preferably 99.5 mass% or lower, 99 mass% or lower, 98 mass% or lower, 95 mass% or lower or 90 mass% or lower.

According to one aspect, the total proportion of the styrene-based elastomer and the acid-modified elastomer with respect to 100 mass% of the thermoplastic elastomer may be 1 mass% or greater, 5 mass% or greater, 10 mass% or greater, 20 mass% or greater, 50 mass% or greater or 70 mass% or greater, and according to another aspect it may be 100 mass%.

### <Styrene-based elastomer and acid-modified styrene-based elastomer>

The resin composition according to one aspect comprises a styrene-based elastomer. The resin composition according to another aspect comprises a styrene-based elastomer and an acid-modified styrene-based elastomer. According to one aspect, the styrene-based elastomer is a copolymer of a conjugated diene monomer and an aromatic vinyl monomer. Conjugated diene monomers include 1,3-butadiene, isoprene, 2,3-dimethyl-1,3-butadiene, 1,3-pentadiene, 3-methyl-1,3-pentadiene, 1,3-heptadiene and 1,3-hexadiene, and any one of these or a combination of two or more may be used. Aromatic vinyl monomers are not particularly restricted so long as they are monomers that are copolymerizable with conjugated diene monomers, and examples include styrene, m- or *p*-methylstyrene, α-methylstyrene, ethylstyrene, p-tert-butylstyrene, vinylethylbenzene, vinylxylene, vinylnaphthalene, diphenylethylene and divinylbenzene, among which any one or combination of two or more may be used. Styrene is preferred from the viewpoint of molding workability of the resin composition and impact resistance of the molded article.

Random copolymers include butadiene-styrene random copolymer, isoprene-styrene random copolymer and butadiene-isoprene-styrene random copolymer. The compositional distribution of each monomer in the copolymer chain may be that of a completely random copolymer having a nearly statistically random composition, or of a tapered (gradient) random copolymer having a gradient in the compositional distribution. A composition with a conjugated diene-based polymer bond form, i.e. 1,4-bonds or 1,2-bonds, may have uniform or different molecules.

A block copolymer may be a copolymer composed of two or more blocks. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The styrene-based elastomer may be an aromatic vinyl compound-conjugated diene compound block copolymer or its hydrogenated form. The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content, and the hydrogenation rate.

The styrene-based elastomer may be partially hydrogenated or completely hydrogenated. From the viewpoint of inhibiting heat degradation during processing, the hydrogenation rate of the hydrogenated product is preferably 50% or higher, 80% or higher or 98% or higher, and from the viewpoint of low-temperature toughness it is preferably 50% or lower, 20% or lower or 0% (i.e. non-hydrogenated). The hydrogenated conjugated diene-based polymer may be a hydrogenated conjugated diene-based polymer as described above, and for example, it may be a hydrogenated styrene-butadiene copolymer.

According to one aspect, the styrene-based elastomer is not acid-modified. According to one aspect, the styrene-based elastomer may be unmodified.

The acid-modified styrene-based elastomer may also be an acid-modified styrene-based elastomer as described above. For the purpose of the disclosure, "acid-modified styrene-based elastomer" means that an acidic functional group is added as an acid-modified group by chemical bonding to the molecular skeleton of the styrene-based elastomer. An "acidic functional group", for the purpose of the disclosure, means a functional group that can react with a basic functional group, and specific examples include hydroxyl, carboxyl, carboxylate, sulfo, and acid anhydride groups.

From the viewpoint of a void-reducing effect due to satisfactory affinity with the cellulose nanofibers, the degree of acid modification, as the mass ratio of acid-modified groups in 100 mass% of the acid-modified styrene-based elastomer, is preferably 0.2 mass% or greater, 0.3 mass% or greater, 0.5 mass% or greater, 1 mass% or greater or 1.5 mass% or greater, and from the viewpoint of affinity with the styrene-based elastomer it is preferably 2.5 mass% or lower, 2.3 mass% or lower or 2 mass% or lower, based on 100 mass% of the acid-modified styrene-based elastomer. The degree of acid modification is the value obtained by measuring the sample against a calibration curve drawn using the characteristic absorption band for the acid, after measuring a calibration sample premixed with the acidic substance using an infrared absorption spectrometer.

According to a preferred aspect, the acid-modified styrene-based elastomer is an acid-modified product of a styrene-based elastomer which is an aromatic vinyl compound-conjugated diene compound copolymer (preferably an aromatic vinyl compound-conjugated diene compound block copolymer) or its hydrogenated form. Such acid-modified styrene-based elastomers include elastomers which are modified forms obtained by grafting α,β-unsaturated dicarboxylic acids or their derivatives onto aromatic compound-conjugated diene copolymers (preferably block copolymers) or their hydrogenated forms, in the presence or in the absence of a peroxide. Specific examples of α,β-unsaturated dicarboxylic acids and their derivatives include maleic acid, fumaric acid, maleic anhydride and fumaric anhydride, with maleic anhydride being particularly preferred. According to a preferred aspect, the acid-modified styrene-based elastomer is an acid anhydride-modified styrene-based elastomer.

From the viewpoint of dispersibility of the cellulose nanofibers, and compatibility with the acid-modified styrene-based elastomer, the styrene-based elastomer is preferably at least one selected from the group consisting of styrene-butadiene block copolymer, styrene-ethylene-butadiene block copolymer, styrene-ethylene-butylene block copolymer, styrene-butadiene-butylene block copolymer, styrene-isoprene block copolymer, styrene-ethylene-propylene block copolymer, styrene-isobutylene block copolymer, hydrogenated styrene-butadiene block copolymer, hydrogenated styrene-ethylene-butadiene block copolymer, hydrogenated styrene-butadiene-butylene block copolymer, hydrogenated styrene-isoprene block copolymer and styrene homopolymer (polystyrene), and more preferably it is at least one selected from the group consisting of styrene-butadiene block copolymer, hydrogenated styrene-butadiene block copolymer, and polystyrene. The acid-modified styrene-based elastomer is more preferably one or more of the acid-modified forms mentioned above from the viewpoint of compatibility with the styrene-based elastomer.

The styrene unit ratio of the acid-modified styrene-based elastomer and the unit ratio of the styrene-based elastomer are each preferably 10 mass% or greater, 19 mass% or greater or 29 mass% or greater, from the viewpoint of affinity between the acid-modified styrene-based elastomer and the styrene-based elastomer and the viewpoint of satisfactorily exhibiting the inherent advantageous properties of the styrene-based elastomer, and preferably 45 mass% or lower, 40 mass% or lower or 35 mass% or lower, from the viewpoint of hardness. The styrene unit ratio is the value determined by the following method. Specifically, a predetermined amount of elastomer is dissolved in chloroform and measured with an ultraviolet spectrophotometer (for example, a UV-2450 by Shimadzu Corp.), and the aromatic vinyl monomer unit (styrene) content is calculated using a calibration curve from the peak intensity at an absorption wavelength (262 nm) due to the aromatic vinyl compound component (styrene).

The styrene unit ratio of the acid-modified styrene-based elastomer and the unit ratio of the styrene-based elastomer are each preferably 10 mol% or greater, 15 mol% or greater or 20 mol% or greater, from the viewpoint of affinity between the acid-modified styrene-based elastomer and the styrene-based elastomer and the viewpoint of satisfactorily exhibiting the inherent advantageous properties of the styrene-based elastomer, and preferably 40 mol% or lower, 35 mol% or lower, 30 mol% or lower or 25 mol% or lower, from the viewpoint of softness of the composition. This unit ratio is particularly preferred when using a tack inhibitor comprising cellulose nanofibers.

The styrene unit ratio is the value determined by NMR.

The ratio of the styrene unit ratio of the styrene-based elastomer with respect to the styrene unit ratio of the acid-modified styrene-based elastomer (styrene ratio of styrene-based elastomer/styrene ratio of acid-modified styrene-based elastomer) is preferably 0.3 or higher, 0.6 or higher or 0.9 or higher from the viewpoint of affinity between the acid-modified styrene-based elastomer and styrene-based elastomer, and preferably 2.5 or lower, 2 or lower or 1.5 or lower from the same viewpoint.

The ratio of the styrene unit ratio with respect to the degree of acid modification (styrene unit ratio/acid modification degree) in the acid-modified styrene-based elastomer is preferably 5 or higher, 10 or higher or 20 or higher, from the viewpoint of affinity with the styrene-based elastomer, and preferably 90 or lower, 85 or lower or 80 or lower, from the viewpoint of affinity with the cellulose nanofibers.

In relation with the styrene-based elastomer and acid-modified styrene-based elastomer, the amount of vinyl bonds (for example, butadiene 1,2- or 3,4-bonds) in the conjugated diene bond unit of a conjugated diene-based polymer is preferably 5 mol% or greater, 10 mol% or greater, 13 mol% or greater or 15 mol% or greater, and preferably 80 mol% or lower, 75 mol% or lower, 65 mol% or lower, 50 mol% or lower or 40 mol% or lower.

The amount of vinyl bonds (for example, butadiene 1,2-bonds) among the conjugated diene bond units can be determined by ¹³C-NMR (quantitative mode). Specifically, integration of the peak area obtained by ¹³C-NMR gives a value proportional to the amount of carbon in each structural unit, which can then be converted to mass% for each structural unit.
Styrene: 145 to 147 ppm
Vinyl: 110 to 116 ppm
Diene (*cis*): 24 to 28 ppm
Diene (*trans*): 29 to 33 ppm

The amount of aromatic vinyl monomer bonded to the conjugated diene monomer in the copolymer of the conjugated diene monomer and the aromatic vinyl monomer (also referred to herein as "aromatic vinyl bond amount") is preferably 5.0 mass% to 70 mass% or 10 mass% to 50 mass%, with respect to the total mass of the styrene-based elastomer. The aromatic vinyl bond amount can be calculated from the ultraviolet absorbance of phenyl groups, and this can be used to further calculate the conjugated diene binding amount.

From the viewpoint of affinity with the styrene-based elastomer, the number-average molecular weight (Mn) of the acid-modified styrene-based elastomer is preferably 10,000 or higher, 30,000 or higher or 50,000 or higher, while from the viewpoint of affinity with the cellulose nanofibers it is preferably 500,000 or lower, 250,000 or lower or 200,000 or lower.

From the viewpoint of both impact strength and flow property, the number-average molecular weight (Mn) of the styrene-based elastomer is preferably 10,000 to 500,000 or 40,000 to 250,000.

According to one aspect, the total amount of the acid-modified styrene-based elastomer and styrene-based elastomer in 100 mass% of the resin composition is 60 mass% or greater, 65 mass% or greater, 70 mass% or greater or 75 mass% or greater. Such a resin composition can exhibit satisfactory rubber elasticity, weather resistance and chemical resistance. According to one aspect, the total amount is 90 mass% or lower, 85 mass% or lower or 80 mass% or lower, from the viewpoint of adding the desired amounts of the other components, especially the cellulose nanofibers.

The amount of the acid-modified styrene-based elastomer with respect to 100 parts by mass of the styrene-based elastomer is preferably 0.5 parts by mass or greater, 1 part by mass or greater or 5 parts by mass or greater, from the viewpoint of improving the surface smoothness of the molded article and increasing the whitening resistance (reducing void generation) when the molded article is stretched, and preferably 50 parts by mass or lower, 40 parts by mass or lower or 30 parts by mass or lower, from the viewpoint of inhibiting coloration, contraction during molding and/or hardness reduction, caused by large amounts of the acid-modified styrene-based elastomer.

The amount of the acid-modified styrene-based elastomer with respect to 1 part by mass of the cellulose nanofibers is preferably 0.5 parts by mass or greater, 1 part by mass or greater or 5 parts by mass or greater, from the viewpoint of improving the surface smoothness of the molded article and increasing the whitening resistance (reducing void generation) when the molded article is stretched, and preferably 45 parts by mass or lower, 40 parts by mass or lower, 35 parts by mass or lower or 30 parts by mass or lower, from the viewpoint of inhibiting coloration, contraction during molding and/or hardness reduction, caused by large amounts of the acid-modified styrene-based elastomer. In a resin composition according to one aspect, the number of acid-modified groups of the acid-modified styrene-based elastomer is not in excess of the number of hydroxyl groups in the surface regions of the cellulose nanofibers (specifically, the regions that provide the surface area in specific surface area measurement of the cellulose nanofibers). The number of hydroxyl groups on the surface regions of the cellulose nanofibers in the resin composition can be calculated from the amount of cellulose nanofibers in the resin composition, the fiber diameters, and the specific surface area. For example, when an acid-modified compound is used for chemical modification of the cellulose nanofibers, an excess of the acid-modified compound may be added to the cellulose nanofibers, but for this embodiment it may be advantageous to limit the amount of acid-modified styrene-based elastomer in the resin composition to the minimum level for the desired degree of affinity with the cellulose nanofibers. From this viewpoint, the amount of the acid-modified styrene-based elastomer is preferably adjusted so that it is not excessive with respect to the number of hydroxyl groups of the cellulose nanofibers, with the aforementioned upper limit being preferred from this viewpoint.

The acid-modified group content of the acid-modified styrene-based elastomer with respect to 100 mass% of the cellulose nanofibers is preferably 0.2 mass% or greater, 0.5 mass% or greater, 0.8 mass% or greater, 1.0 mass% or greater, 1.2 mass% or greater or 1.5 mass% or greater, from the viewpoint of affinity with the cellulose nanofibers, and preferably 5.0 mass% or lower, 3.0 mass% or lower, 2.5 mass% or lower or 2.0 mass% or lower, from the viewpoint of inhibiting coloration, contraction during molding and/or reduction in hardness due to the acid-modified styrene-based elastomer, based on 100 mass% of the acid-modified styrene-based elastomer.

The amount of the acid-modified styrene-based elastomer in 100 mass% of the resin composition is preferably 0.5 mass% or greater, 1 mass% or greater or 5 mass% or greater, from the viewpoint of improving the surface smoothness of the molded article and the whitening resistance (reducing void formation) when the molded article is stretched, and preferably 50 mass% or lower, 40 mass% or lower or 30 mass% or lower, from the viewpoint of inhibiting coloration, shrinkage during molding and/or reduction in hardness caused by large amounts of the acid-modified styrene-based elastomer. Acid-modified styrene-based elastomers are relatively expensive in general, and reducing the amount of their use is therefore also advantageous from the standpoint of cost.

According to one aspect, the type and/or amount of the acid-modified styrene-based elastomer may be selected to control the behavior of the stress-strain curve (such as yield behavior) in tensile testing of the resin composition, according to the intended purpose of use of the resin composition.

The amount of styrene-based elastomer with respect to 1 part by mass of the cellulose nanofibers is preferably 0.5 parts by mass or greater, 1 part by mass or greater or 5 parts by mass or greater, from the viewpoint of obtaining the inherent satisfactory rubber elasticity, weather resistance and chemical resistance of the styrene-based elastomer, and preferably 250 parts by mass or less, 200 parts by mass or less or 150 parts by mass or less, from the viewpoint of increasing the surface smoothness and hardness of the molded article.

The amount of styrene-based elastomer in 100 mass% of the resin composition is preferably 10 mass% or greater, 20 mass% or greater or 30 mass% or greater, from the viewpoint of satisfactorily exhibiting the inherent advantageous properties of the styrene-based elastomer, and preferably 98.8 mass% or less, 90 mass% or less or 80 mass% or less, from the viewpoint of comprising the desired amounts of the other components.

From the viewpoint of obtaining satisfactory mechanical properties for the resin composition, the melt mass-flow rate (MFR) of the styrene-based elastomer at 230°C and 2.16 kg is preferably 20 g/10 min or lower, 15 g/10 min or lower, 10 g/10 min or lower, 8 g/10 min or lower or 5 g/10 min or lower, while from the viewpoint of facilitating melt processing it is preferably 0.1 g/10 min or higher, 0.5 g/10 min or higher or 1.0 g/10 min or higher.

### <Styrene-based elastomer and acid-modified styrene-based elastomer for aspect using tack inhibitor comprising cellulose nanofibers>

Examples will now be provided of styrene-based elastomers and acid-modified styrene-based elastomers particularly suitable for the aspect of using a tack inhibitor comprising cellulose nanofibers. The resin composition according to one aspect comprises an acid-modified styrene-based elastomer. It has also been found that the presence of an acid-modified styrene-based elastomer in addition to the cellulose nanofibers can further improve the tensile strength, tensile modulus, tensile breaking elongation and/or hardness of a molded article, while also reducing inconveniences such as whitening and coloration of the molded article. Without being limited to any particular theory, it is believed that reaction between the hydroxyl groups of the cellulose nanofibers and the acid-modified groups of the acid-modified styrene-based elastomer reinforces their interfaces, helping to prevent detachment between the styrene-based elastomer, cellulose nanofibers and acid-modified styrene-based elastomer when external force has been applied to the molded article, while also helping to prevent coloration caused by heat degradation of the cellulose nanofibers. Presumably, this satisfactorily exhibits an effect of improving the physical properties of the cellulose nanofibers, while also inhibiting generation of voids in the molded article caused by detachment and reducing whitening, and also inhibiting coloration of the cellulose nanofibers. The presence of an acid-modified styrene-based elastomer in the resin composition is also advantageous from the viewpoint of further reducing tackiness caused by the styrene-based elastomer.

In the resin composition according to one aspect, the acid-modified styrene-based elastomer and styrene-based elastomer are compatibilized without phase separation, and are in a continuous phase. In the resin composition according to another aspect, the acid-modified styrene-based elastomer forms a first phase, while the styrene-based elastomer forms a second phase that is phase separated from the first phase. According to yet another aspect, the total amount of the acid-modified styrene-based elastomer and styrene-based elastomer is 60 mass% or greater in 100 mass% of the resin composition. According to one aspect, the second phase is a continuous phase. According to another aspect, the first phase is a dispersed phase and the second phase is a continuous phase. The dispersed phase may have a domain size of 20 nm to 10 µm, for example. The domain size can be determined from a scanning electron microscope (SEM) image. Alternatively, according to one aspect, both the first phase and second phase may be continuous phases. By phase separation of the acid-modified styrene-based elastomer and styrene-based elastomer, the styrene-based elastomer portion in the resin composition allows the inherent satisfactory properties of the styrene-based elastomer to be exhibited, while the acid-modified styrene-based elastomer portion in the resin composition, intervening between the styrene-based elastomer and the cellulose nanofibers due to satisfactory affinity with both the styrene-based elastomer and cellulose nanofibers, contributes to a further effect of improving the physical properties by the cellulose nanofibers.

The acid-modified styrene-based elastomer may also be an acid-modified styrene-based elastomer as described above. Preferred examples of acid-modified styrene-based elastomers are those mentioned above.

The amount of styrene-based elastomer with respect to 1 part by mass of the cellulose nanofibers is preferably 0.5 parts by mass or greater, 1 part by mass or greater, 3 parts by mass or greater, 5 parts by mass or greater, 7 parts by mass or greater, 10 parts by mass or greater or 15 parts by mass or greater, from the viewpoint of obtaining the inherent satisfactory rubber elasticity, weather resistance and chemical resistance of the styrene-based elastomer, and preferably 250 parts by mass or lower, 150 parts by mass or lower or 100 parts by mass or lower, from the viewpoint of reducing tackiness and increasing the hardness of the molded article.

From the viewpoint of satisfactorily obtaining the inherent advantages of the styrene-based elastomer, the amount of the styrene-based elastomer in 100 mass% of the resin composition is preferably 10 mass% or greater, 20 mass% or greater, 40 mass% or greater, 50 mass% or greater, 60 mass% or greater, 70 mass% or greater or 80 mass% or greater, while from the viewpoint of comprising the desired amounts of the other components, it is preferably 99.5 mass% or lower, 99 mass% or lower, 98 mass% or lower, 95 mass% or lower or 90 mass% or lower.

From the viewpoint of obtaining satisfactory mechanical properties for the resin composition, the melt mass-flow rate (MFR) of the styrene-based elastomer at 230°C and 2.16 kg is preferably 20 g/10 min or lower, 15 g/10 min or lower, 10 g/10 min or lower, 8 g/10 min or lower or 5 g/10 min or lower, while from the viewpoint of facilitating melt processing it is preferably 0.1 g/10 min or higher, 0.5 g/10 min or higher or 1.0 g/10 min or higher.

From the viewpoint of affinity with the cellulose nanofibers, the degree of acid modification, as the mass ratio of acid-modified groups in 100 mass% of the acid-modified styrene-based elastomer, is preferably 0.2 mass% or greater, 0.5 mass% or greater, 0.8 mass% or greater, 1.0 mass% or greater, 1.2 mass% or greater or 1.5 mass% or greater, and from the viewpoint of affinity with the styrene-based elastomer it is preferably 5.0 mass% or lower, 3.0 mass% or lower, 2.5 mass% or lower or 2.0 mass% or lower, based on 100 mass% of the acid-modified styrene-based elastomer.

The ratio of the styrene unit ratio of the styrene-based elastomer with respect to the styrene unit ratio of the acid-modified styrene-based elastomer (styrene ratio of styrene-based elastomer/styrene ratio of acid-modified styrene-based elastomer) is preferably 0.3 or higher, 0.35 or higher or 0.4 or higher from the viewpoint of affinity between the acid-modified styrene-based elastomer and styrene-based elastomer, and preferably 4 or lower, 3 or lower or 2 or lower from the same viewpoint.

The ratio of the styrene unit ratio with respect to the degree of acid modification (styrene unit ratio/acid modification degree) in the acid-modified styrene-based elastomer is preferably 5 or higher, 8 or higher or 12 or higher, from the viewpoint of affinity with the styrene-based elastomer, and preferably 90 or lower, 50 or lower or 30 or lower, from the viewpoint of affinity with the cellulose nanofibers.

From the viewpoint of affinity with the styrene-based elastomer, the melt mass-flow rate (MFR) of the acid-modified styrene-based elastomer at 230°C and 2.16 kg is preferably 0.1 g/10 min or greater, 0.5 g/10 min or greater or 1.0 g/10 min, while from the viewpoint of affinity with the cellulose nanofibers it is preferably 20 g/10 min or lower, 15 g/10 min or lower, 10 g/10 min or lower, 8 g/10 min or lower or 5 g/10 min or lower.

According to one aspect, the total amount of the acid-modified styrene-based elastomer and styrene-based elastomer in 100 mass% of the resin composition is 50 mass% or greater, 60 mass% or greater, 70 mass% or greater or 80 mass% or greater. Such a resin composition can exhibit satisfactory rubber elasticity, weather resistance and chemical resistance. According to one aspect, the total amount is 99.5 mass% or lower, 99 mass% or lower, 98 mass% or lower, 95 mass% or lower or 90 mass% or lower, from the viewpoint of adding the desired amounts of the other components, especially the cellulose nanofibers.

The amount of the acid-modified styrene-based elastomer with respect to 100 parts by mass of the styrene-based elastomer is preferably 0.5 parts by mass or greater, 1 part by mass or greater or 5 parts by mass or greater, from the viewpoint of satisfactorily obtaining the advantages of the acid-modified styrene-based elastomer, and preferably 100 parts by mass or lower, 50 parts by mass or lower, 20 parts by mass or lower or 10 parts by mass or lower, from the viewpoint of inhibiting coloration, contraction during molding and/or hardness reduction caused by large amounts of the acid-modified styrene-based elastomer.

The amount of the acid-modified styrene-based elastomer with respect to 1 part by mass of the cellulose nanofibers is preferably 0.1 part by mass or greater, 0.3 parts by mass or greater, 0.5 parts by mass or greater or 0.8 parts by mass or greater, from the viewpoint of satisfactorily obtaining the advantages of the acid-modified styrene-based elastomer, and preferably 45 parts by mass or lower, 30 mass% or lower, 20 parts by mass or lower, 10 parts by mass or lower, 5 parts by mass or lower, 3 parts by mass or lower or 2 parts by mass or lower, from the viewpoint of inhibiting coloration, contraction during molding and/or hardness reduction caused by large amounts of the acid-modified styrene-based elastomer.

From the viewpoint of satisfactorily obtaining the advantages of the acid-modified styrene-based elastomer, the amount of the acid-modified styrene-based elastomer in 100 mass% of the resin composition is preferably 0.5 mass% or greater, 1 mass% or greater, 2 mass% or greater, 3 mass% or greater or 4 mass% or greater, while from the viewpoint of inhibiting coloration, contraction during molding and/or hardness reduction caused by large amounts of the acid-modified styrene-based elastomer, it is preferably 50 mass% or lower, 30 mass% or lower, 20 mass% or lower or 10 mass% or lower. Acid-modified styrene-based elastomers are relatively expensive in general, and reducing the amount of their use is therefore also advantageous from the standpoint of cost.

The content of the styrene-based elastomer among the resin composition components is preferably 10 mass% or greater or 20 mass% or greater, and preferably 90 mass% or lower, 85 mass% or lower or 80 mass% or lower.

The total content of the styrene-based elastomer and acid-modified styrene-based elastomer among the resin composition components is preferably 40 mass% or greater, 45 mass% or greater or 50 mass% or greater, and preferably 99 mass% or lower, 95 mass% or lower or 90 mass% or lower.

The content of the acid-modified styrene-based elastomer with respect to 100 parts by mass as the total of the styrene-based elastomer and acid-modified styrene-based elastomer among the resin composition components is preferably 5 parts by mass or greater, 10 parts by mass or greater or 15 parts by mass or greater, and preferably 70 parts by mass or lower, 65 parts by mass or lower or 60 parts by mass or lower.

The amount of cellulose nanofibers among the resin composition components is preferably 1 part by mass or greater, 2 parts by mass or greater or 3 parts by mass or greater, and preferably 70 parts by mass or lower, 65 parts by mass or lower or 60 parts by mass or lower, with respect to 100 parts by mass as the total of the styrene-based elastomer and acid-modified styrene-based elastomer.

The mass ratio of [cellulose nanofibers]/[total of styrene-based elastomer and acid-modified styrene-based elastomer] in the resin composition component is preferably 1/99 to 60/40, 2/98 to 50/50 or 3/97 to 40/60.

### <Liquid polymer>

According to one aspect, the resin composition may comprise a liquid polymer. A liquid polymer is a polymer having a flow property at 23°C. According to one aspect, the liquid polymer has a glass transition temperature (Tg). According to another aspect, the liquid polymer may be a conjugated diene-based polymer or a non-conjugated diene-based polymer. According to yet another aspect, the liquid polymer is liquid rubber. For the purpose of the disclosure, "liquid rubber" is a substance having a flow property at 23°C and forming a rubber elastomer by crosslinking (more specifically, vulcanization) and/or chain extension. That is, according to one aspect the liquid rubber is uncured.

The "flow property" means, according to one aspect, that when the liquid polymer that has been dissolved in cyclohexane is placed in a vial with dimensions of 21 mm torso diameter × 50 mm full length at 23°C and then dried, causing the liquid polymer to fill the vial up to a height of 1 mm, and the vial is then closed shut, vertically inverted and allowed to stand for 24 hours, the substance can be observed to move at least 0.1 mm in the height direction.

The liquid polymer may be a common monomer composition for a polymer, and it preferably has a relatively low molecular weight from the viewpoint of easier handleability and obtaining satisfactory dispersibility of the cellulose nanofibers. According to one aspect, the liquid polymer is in liquid form with a number-average molecular weight (Mn) of 80,000 or lower. Unless otherwise specified, the number-average molecular weight and weight-average molecular weight of the polymer of the disclosure are the values determined in terms of standard polystyrene, using gel permeation chromatography with a chloroform solvent, at a measuring temperature of 40°C.

According to one aspect, the liquid polymer may be combined with the cellulose nanofibers to form a master batch, the master batch being combined with a resin to form the resin composition of the disclosure.

The number-average molecular weight (Mn) of the liquid polymer is preferably 1,000 or greater, 1,500 or greater or 2,000 or greater, from the viewpoint of thermal stability and of increasing dispersibility of the cellulose nanofibers in the resin, and preferably 80,000 or lower, 50,000 or lower, 40,000 or lower, 30,000 or lower or 10,000 or lower, from the viewpoint of exhibiting a high flow property suitable for forming a satisfactory dispersion of the cellulose nanofibers in the liquid polymer.

The weight-average molecular weight (Mw) of the liquid polymer is preferably 1,000 or greater, 2,000 or greater or 4,000 or greater, from the viewpoint of thermal stability and of increasing dispersibility of the cellulose nanofibers in the resin, and preferably 240,000 or lower, 150,000 or lower or 30,000 or lower, from the viewpoint of exhibiting a high flow property suitable for forming a satisfactory dispersion of the cellulose nanofibers in the liquid polymer.

The ratio of the number-average molecular weight (Mn) and the weight-average molecular weight (Mw) (Mw/Mn) of the liquid polymer is preferably 1.5 or higher, 1.8 or higher or 2 or higher from the viewpoint of allowing high levels of multiple properties (which are, according to one aspect, high levels of both satisfactory dispersion of the cellulose nanofibers in the resin and a satisfactory flexural modulus of the resin composition) by producing some degree of variation in the molecular weight, and preferably 10 or lower, 8 or lower, 5 or lower, 3 or lower or 2.7 or lower, from the viewpoint of stably obtaining the desired physical properties for a resin composition, such as flow property and impact resistance, without excessively large variation in molecular weight.

The liquid polymer may be one with satisfactory thermal stability. According to one aspect, the thermal decomposition initiation temperature (T_{D}) of the liquid polymer is higher than 200°C, or 210°C or higher, 230°C or higher, 250°C or higher or 300°C or higher, from the viewpoint of satisfactory thermal stability. While a higher thermal decomposition initiation temperature is preferred, according to one aspect it is 500°C or lower, 450°C or lower or 400°C or lower, from the viewpoint of availability of the liquid polymer.

The glass transition temperature of the liquid polymer is preferably -150°C or higher, - 120°C or higher or -100°C or higher from the viewpoint of satisfactory thermal stability, and preferably 25°C or lower, 10°C or lower or 0°C or lower, from the viewpoint of a satisfactory flow property.

According to one aspect, the liquid polymer comprises a diene-based polymer, and according to another aspect it comprises a conjugated diene-based polymer or non-conjugated diene-based polymer, or a hydrogenated form of the same. The polymer or its hydrogenated product may also be an oligomer. The monomer composing the liquid polymer may be an unmodified or modified monomer (such as an acid modified or hydroxyl-modified monomer). According to one aspect, the liquid polymer may have reactive groups at both ends (for example, one or more selected from the group consisting of hydroxyl, carboxy, isocyanato, thio, amino and halo groups), in which case it may be bifunctional. The reactive groups contribute to crosslinking and/or chain extension of the liquid polymer.

### [Conjugated diene-based polymer]

The conjugated diene-based polymer may be a homopolymer or a copolymer of two or more conjugated diene monomers, or a copolymer of a conjugated diene monomer and another monomer. The copolymer may be either random or block.

Conjugated diene monomers include 1,3-butadiene, isoprene, 2,3-dimethyl-1,3-butadiene, 1,3-pentadiene, 3-methyl-1,3-pentadiene, 1,3-heptadiene and 1,3-hexadiene, and any one of these or a combination of two or more may be used.

According to one aspect, the conjugated diene-based polymer is a copolymer of a conjugated diene monomer and an aromatic vinyl monomer.

Aromatic vinyl monomers are not particularly restricted so long as they are monomers that are copolymerizable with conjugated diene monomers, and examples include styrene, *m-* or *p-*methylstyrene, α-methylstyrene, ethylstyrene, p-*tert*-butylstyrene, vinylethylbenzene, vinylxylene, vinylnaphthalene, diphenylethylene and divinylbenzene, among which any one or combination of two or more may be used. Styrene is preferred from the viewpoint of molding workability of the resin composition and impact resistance of the molded article.

Random copolymers include butadiene-isoprene random copolymer, butadiene-styrene random copolymer, isoprene-styrene random copolymer and butadiene-isoprene-styrene random copolymer. The compositional distribution of each monomer in the copolymer chain may be that of a completely random copolymer having a nearly statistically random composition, or of a tapered (gradient) random copolymer having a gradient in the compositional distribution. A composition with a conjugated diene-based polymer bond form, i.e. 1,4-bonds or 1,2-bonds, may have uniform or different molecules.

A block copolymer may be a copolymer composed of two or more blocks. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content, and the hydrogenation rate.

The amount of vinyl bonds (for example, butadiene 1,2- or 3,4-bonds) among the conjugated diene bond units in the conjugated diene-based polymer is preferably 10 mol% to 75 mol% or 13 mol% to 65 mol%.

The amount of vinyl bonds (for example, butadiene 1,2-bonds) among the conjugated diene bond units can be determined by ¹³C-NMR (quantitative mode). Specifically, integration of the peak area obtained by ¹³C-NMR gives a value proportional to the amount of carbon in each structural unit, which can then be converted to mass% for each structural unit.
Styrene: 145 to 147 ppm
Vinyl: 110 to 116 ppm
Diene (*cis*): 24 to 28 ppm
Diene (*trans*): 29 to 33 ppm

The amount of aromatic vinyl monomer bonded to the conjugated diene monomer in the copolymer of the conjugated diene monomer and the aromatic vinyl monomer (also referred to herein as "aromatic vinyl bond amount") is preferably 5 mol% to 70 mol% or 10 mol% to 50 mol%, with respect to the 100% as the total moles of the conjugated diene-based polymer.

A hydrogenated conjugated diene-based polymer may be a hydrogenated form of any of the conjugated diene-based polymers mentioned above, and for example, it may be a hydrogenated butadiene homopolymer, isoprene homopolymer, styrene-butadiene copolymer or acrylonitrile-butadiene copolymer.

According to a preferred aspect, the liquid polymer is one or more selected from the group consisting of polybutadiene, butadiene-styrene copolymer, polyisoprene and polychloroprene. Their derivatives (such as maleic anhydride-modified derivatives, methacrylic acid-modified derivatives, terminal hydroxyl-modified derivatives, hydrogenated products, or combinations of these), may also be used.

### [Non-conjugated diene-based polymer]

The non-conjugated diene-based polymer may be a homopolymer or a copolymer of two or more non-conjugated diene monomers or a copolymer of a non-conjugated diene monomer and another monomer. The copolymer may be either random or block. Non-conjugated diene-based polymers include olefin-based polymers (such as liquid paraffin), silicone polymers and acrylic polymers. For example, when the liquid polymer is liquid rubber, the non-conjugated diene-based polymer may be:
an olefin-based polymer such as ethylene-propylene rubber, ethylene-propylene-diene rubber, ethylene-butene-diene rubber or ethylene-α-olefin copolymer, or
butyl rubber, brominated butyl rubber, acrylic rubber, fluorine rubber, silicone rubber, chlorinated polyethylene rubber, epichlorohydrin rubber, α,β-unsaturated nitrile-acrylic acid ester-conjugated diene copolymer rubber, urethane rubber or polysulfide rubber.

For ethylene-α-olefin copolymers, monomers that may be copolymerized with the ethylene unit include aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1, eicosene-1 and isobutylene; aromatic vinyl monomers such as styrene and substituted styrene; esteric vinyl monomers such as vinyl acetate, acrylic acid ester, methacrylic acid ester, glycidylacrylic acid ester, glycidylmethacrylic acid ester and hydroxyethylmethacrylic acid ester, nitrogen-containing vinyl monomers such as acrylamide, allylamine, vinyl-p-aminobenzene and acrylonitrile, and dienes such as butadiene, cyclopentadiene, 1,4-hexadiene and isoprene.

The ethylene-α-olefin copolymer is preferably a copolymer of ethylene and one or more α-olefins of 3 to 20 carbon atoms, more preferably a copolymer of ethylene and one or more α-olefins of 3 to 16 carbon atoms, and most preferably a copolymer of ethylene and one or more α-olefins of 3 to 12 carbon atoms.

From the viewpoint of exhibiting impact resistance, the molecular weight of the ethylene-α-olefin copolymer is a number-average molecular weight (Mn) of preferably 10,000 or higher, more preferably 10,000 to 100,000, even more preferably 10,000 to 80,000 and yet more 20,000 to 60,000, measured with a gel permeation chromatography apparatus using 1,2,4-trichlorobenzene as the solvent, at 140°C, in terms of standard polystyrene.

From the viewpoint of handleability during processing, the ethylene unit content for the ethylene-α-olefin copolymer is preferably 30 to 95 mass% with respect to the total amount of the ethylene-α-olefin copolymer.

The ethylene-α-olefin copolymer can be produced by a conventional publicly known method as described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 or US Patent No. 5272236, for example.

According to one aspect, the liquid polymer comprises one or more types selected from the group consisting of diene rubber, silicone rubber, urethane rubber and polysulfide rubber, as well as their hydrogenated forms, and preferably comprises diene rubber.

From the viewpoint of satisfactorily dispersing the cellulose nanofibers in the liquid polymer, the viscosity of the liquid polymer at 25°C is preferably 1,000,000 mPa·s or lower, 500,000 mPa·s or lower or 200,000 mPa·s or lower, while from the viewpoint of thermal stability, increasing dispersibility of the cellulose nanofibers in the resin, and the mechanical properties of the resin composition, it is preferably 100 mPa·s or higher, 300 mPa·s or higher or 500 mPa·s or higher.

From the viewpoint of satisfactorily dispersing the cellulose nanofibers in the liquid polymer, and from the viewpoint of satisfactorily dispersing the cellulose nanofibers in the resin by heat-kneading, the viscosity of the liquid polymer at 50°C is preferably 1,000,000 mPa·s or lower, 500,000 mPa·s or lower, 200,000 mPa·s or lower or 100,000 mPa·s or lower, while from the viewpoint of thermal stability, increasing dispersibility of the cellulose nanofibers in the resin, and the mechanical properties of the resin composition, it is preferably 50 mPa·s or higher, 100 mPa·s or higher or 500 mPa·s or higher.

From the viewpoint of satisfactorily dispersing the cellulose nanofibers in the liquid polymer, and from the viewpoint of satisfactorily dispersing the cellulose nanofibers in the resin by heat-kneading, the viscosity of the liquid polymer at 80°C is preferably 1,000,000 mPa·s or lower, 500,000 mPa·s or lower, 250,000 mPa·s or lower or 100,000 mPa·s or lower, while from the viewpoint of thermal stability, increasing dispersibility of the cellulose nanofibers in the resin, and the mechanical properties of the resin composition, it is preferably 50 mPa·s or higher, 100 mPa·s or higher or 300 mPa·s or higher.

From the viewpoint of satisfactorily dispersing the cellulose nanofibers in the liquid polymer, the viscosity of the liquid polymer at 0°C is preferably 2,000,000 mPa·s or lower, 1,000,000 mPa·s or lower or 400,000 mPa·s or lower, while from the viewpoint of thermal stability, increasing dispersibility of the cellulose nanofibers in the resin, and the mechanical properties of the resin composition, it is preferably 200 mPa·s or higher, 600 mPa·s or higher or 1,000 mPa·s or higher.

It is preferred for the viscosity of the liquid polymer at 80°C, 50°C, 25°C and 0°C to all be within the aforementioned ranges, from the viewpoint of satisfactorily dispersing the cellulose nanofibers in the liquid polymer within a wide range of mixing temperatures.

The viscosity of the liquid polymer is the value measured using a Brookfield viscometer with a rotational speed of 10 rpm.

From the viewpoint of satisfactorily obtaining the advantages of the liquid polymer, the amount of liquid polymer with respect to 100 parts by mass of the styrene-based elastomer in the resin composition is preferably 0.1 part by mass or greater, 0.3 parts by mass or greater, 0.5 parts by mass or greater or 1.0 parts by mass or greater, while from the viewpoint of satisfactorily obtaining the advantages of the acid-modified styrene-based elastomer, or obtaining a resin composition exhibiting the inherent physical properties of the styrene-based elastomer, it is preferably 15 parts by mass or lower, 10 parts by mass or lower or 5 parts by mass or lower.

From the viewpoint of satisfactorily obtaining the advantages of the liquid polymer, the amount of liquid polymer with respect to 100 parts by mass of the cellulose nanofibers in the resin composition is preferably 5 parts by mass or greater, 10 parts by mass or greater, 20 parts by mass or greater, 30 parts by mass or greater or 40 parts by mass or greater, while from the viewpoint of obtaining satisfactory physical properties for the resin composition and resin molded body, it is preferably 400 parts by mass or lower, 200 parts by mass or lower or 100 parts by mass or lower.

From the viewpoint of satisfactorily obtaining the advantages of the liquid polymer, the content of the liquid polymer in the resin composition is preferably 0.1 mass% or greater, 0.3 mass% or greater or 1.0 mass% or greater, while from the viewpoint of obtaining satisfactory physical properties for the resin composition and resin molded body, it is preferably 20 mass% or lower, 10 mass% or lower, 7 mass% or lower or 5 mass% or lower.

### <Dispersing agent>

According to one aspect, the resin composition comprises a dispersing agent. According to one aspect, the dispersing agent more preferably has a hydrophilic segment and a hydrophobic segment in the same molecule (that is, it is an amphiphilic molecule), from the viewpoint of uniformly dispersing the cellulose nanofibers in the resin composition. According to a preferred aspect, the resin composition comprises a polyoxyethylene unit-containing polymer.

### [Amphiphilic molecule]

In an amphiphilic molecule, the hydrophilic segment is a portion that exhibits satisfactory affinity with the cellulose nanofibers since it includes a hydrophilic structure. Specific hydrophilic structures include groups derived from saccharides such as hydroxyl, thiol, carboxy, sulfonic acid, sulfuric acid ester, phosphoric acid, boronic acid, silanol and sorbitan groups, as well as groups derived from sugars such as sucrose, groups derived from glycerin, groups represented by -OM, -COOM, -SO₃M, -OSO₃M, -HMPO₄ and -M₂PO₄ (where M represents an alkali metal or alkaline earth metal), and primary to tertiary amines and quaternary ammonium salts. The counter anion of a quaternary ammonium salt may be one or more hydrophilic groups selected from the group consisting of halide ions such as hydroxide ion, fluoride ion, chloride ion, bromide ion or iodide ion; and nitrate ion, formate ion, acetate ion, trifluoroacetate ion, *p-*toluenesulfonate ion, hexafluorophosphate and tetrafluoroborate.

Examples of hydrophilic segments include polyethylene glycol segments, segments with repeating units containing quaternary ammonium salt structures, polyvinyl alcohol segments, polyvinylpyrrolidone segments, polyacrylic acid segments, carboxyvinyl polymer segments, cationized guar gum segments, hydroxyethyl cellulose segments, methyl cellulose segments, carboxymethyl cellulose segments and polyurethane soft segments (specifically, diol segments). A nonionic polyoxyethylene derivative is particularly preferred, and the polyoxyethylene chain length of the polyoxyethylene derivative may be 3 or greater, 5 or greater, 10 or greater or 15 or greater. A longer chain length will increase affinity with the cellulose nanofibers, but from the viewpoint of balance between the desired properties (for example, mechanical properties) of the resin molded body, the polyoxyethylene chain length may be 60 or less, 50 or less, 40 or less, 30 or less or 20 or less.

Examples of hydrophobic segments include segments with hydrocarbons, segments with fluorocarbons, segments with alkylene oxide units of 3 or more carbon atoms (for example, PPG blocks), and segments comprising a polymer structure.

Preferred segments with hydrocarbons include alkyl-type, alkenyl-type, alkyl ether-type, alkenyl ether-type, alkylphenyl ether-type, alkenylphenyl ether-type, rosin ester-type, bisphenol A-type, β-naphthyl-type, styrenated phenyl-type and hydrogenated castor oil-type segments. The number of carbon atoms in a hydrophobic group alkyl chain or alkenyl chain (or for alkylphenyl or alkenylphenyl, the number of carbon atoms minus the phenyl group) is preferably 2 or more, 5 or more, 10 or more, 12 or more or 16 or more.

The segment with a fluorocarbon is preferably a straight-chain or branched alkyl-type group of 1 to 20 carbon atoms.

Preferred segments containing polymer structures include acrylic polymers, styrene-based resins, vinyl chloride-based resins, vinylidene chloride-based resins, polyolefin-based resins, amino acid lactams containing lactam ring-opening polymers, polymers composed of diamines and dicarboxylic acids, polyacetal-based resins, polycarbonate-based resins, polyester-based resins, polyphenylene sulfide-based resins, polysulfone-based resins, polyether ketone-based resins, polyimide-based resins, fluorine-based resins, hydrophobic silicone-based resins, melamine-based resins, epoxy-based resins and phenol-based resins.

These hydrophobic segments may have straight-chain structures or branched structures. The hydrophobic segment may have a single-chain structure or a structure with two or more chains, and in the case of a structure with two or more chains, it may have multiple different types of hydrophobic groups.

The structure of the amphiphilic molecule is not particularly restricted, and if the hydrophilic segment is represented as A and the hydrophobic segment as B, then it may be a linear copolymer such as an AB block copolymer, ABA block copolymer or BAB block copolymer, or a 3-branch copolymer comprising A and B, a 4-branch copolymer comprising A and B, a star copolymer comprising A and B, a monocyclic copolymer comprising A and B, a polycyclic copolymer comprising A and B, a cage-type copolymer comprising A and B, or a graft copolymer comprising A and B.

When multiple hydrophilic segment molecules are present in the molecule, the molecular structure may be of a single type or a combination of two or more types. Likewise, when multiple hydrophobic segment molecules are present in the molecule, the molecular structure may be of a single type or a combination of two or more types.

### (Surfactants)

An amphiphilic molecule used may be any anionic surfactant, nonionic surfactant, cationic surfactant or amphoteric surfactant. The dispersing agent may be a polymeric surfactant or a reactive surfactant.

Examples of nonionic surfactants include fatty acid dialkanolamides (for example, lauric acid diethanolamide), polyoxyalkylene fatty acid amides (for example, polyoxyethylene stearic acid amide), polyoxyalkylene aryl ethers (for example, polyoxyethylene phenyl ether), polyoxyalkylene alkylaryl ethers (for example, polyoxyethylene octylphenyl ether), polyoxyalkylene alkyl or alkenyl ethers (for example, polyoxyethylene lauryl ether and polyoxyethylene stearyl ether), polyhydric alcohol fatty acid esters (for example, polyethylene glycol mono or distearic acid esters, polyethylene glycol mono or dilauric acid esters and polyoxyethylene hydrogenated castor oil), glycerin fatty acid esters (for example, glycerin monostearate and glycerin monooleate), sorbitan fatty acid esters (for example, sorbitan monolaurate and sorbitan monostearate), and polyoxyethylene-polyoxypropylene block copolymers.

An anionic surfactant (emulsifier) may be a carboxylic acid salt, sulfonic acid salt, sulfuric acid ester or phosphoric acid ester, examples of which include carboxylic acid salts such as aliphatic monocarboxylic acid and alkyl ether carboxylic acid salts, sulfonic acid salts such as dialkylsulfosuccinates, alkanesulfonates, alkylbenzenesulfonates and alkylnaphthalenesulfonates, sulfuric acid esters such as alkyl sulfates and fatty acid sulfates, and phosphoric acid esters such as alkyl phosphates and polyoxyethylene alkyl ether phosphates.

Cationic surfactants include amine salts, amidoamine salts, quaternary ammonium salts and imidazolinium salts. Specific examples include, but are not limited to, amine salt-type surfactants such as alkylamine salts, polyoxyethylenealkylamine salts, alkylamidoamine salts, amino alcohol fatty acid derivatives, polyamine fatty acid derivatives and imidazoline, and quaternary ammonium salt-type surfactants such as alkyltrimethylammonium salts, dialkyldimethylammonium salts, alkyldimethylbenzylammonium salts, alkylpyridinium salts, alkylisoquinolinium salts and benzethonium chloride.

Examples of amphoteric surfactants include alkylamine oxides, alanines, imidazoliniumbetaines, amidobetaines and betaine acetate, and specifically long-chain amineoxide, lauryl betaine, stearyl betaine, laurylcarboxymethylhydroxyethyl imidazolinium betaine, betaine lauryldimethylaminoacetate and fatty acid betaine amidopropyldimethylaminoacetate.

### [Hydrophilic polymer]

According to one aspect, the dispersing agent is preferably a hydrophilic polymer. According to another aspect, the hydrophilic polymer is a polymer having a hydrophilic group selected from the group consisting of hydroxyl, carboxy, amino, ammonium, sulfonic acid and phosphoric acid groups. The hydrophilic polymer used may be one or more selected from the group consisting of cellulose derivatives (such as hydroxyethyl cellulose, methyl cellulose and carboxymethyl cellulose), polyalkylene glycols, polyvinyl alcohol, polyvinylpyrrolidone, polyacrylic acid, carboxyvinyl polymers, cationized guar gum, water-soluble polyurethane, polymers including quaternary ammonium salt structures, amides and amines. Cellulose derivatives and polyalkylene glycols are more preferred, with polyalkylene glycols being especially preferred.

The amount of dispersing agent in the resin composition is preferably 1 part by mass or greater, 3 parts by mass or greater, 5 parts by mass or greater, 10 parts by mass or greater or 15 parts by mass or greater, and preferably 200 parts by mass or lower, 150 parts by mass or lower, 100 parts by mass or lower, 90 parts by mass or lower, 80 parts by mass or lower, 70 parts by mass or lower, 60 parts by mass or lower or 50 parts by mass or lower, with respect to 100 parts by mass of the cellulose nanofibers.

The dispersing agent content among the resin composition components may be 0.1 mass% or greater, 0.5 mass% or greater or 1 mass% or greater, according to one aspect, and 40 mass% or lower, 35 mass% or lower or 30 mass% or lower, according to another aspect.

For example, when a preliminary composition comprising cellulose nanofibers and an acid-modified styrene-based elastomer is supplied for production of a resin composition, the mass ratio of the preliminary composition and styrene-based elastomer (preliminary composition/styrene-based elastomer) in the resin composition component may be 1/99 to 99/1, 5/95 to 95/5, 10/90 to 90/10, 20/80 to 80/20 or 30/70 to 70/30, according to one aspect.

### [Vulcanizing agent and vulcanization accelerator]

When the resin composition components include liquid rubber, the resin composition components will typically include a vulcanizing agent, and optionally also a vulcanization accelerator. The vulcanizing agent and vulcanization accelerator may be appropriately selected from among conventional publicly known compounds, depending on the type of liquid rubber among the resin composition components. The vulcanizing agent used may be an organic peroxide, an azo compound, an oxime compound, a nitroso compound, a polyamine compound, sulfur or a sulfur compound. Sulfur compounds include sulfur monochloride, sulfur dichloride, disulfide compounds and polymer polysulfur compounds.

The amount of vulcanizing agent among the resin composition components is preferably 0.01 parts by mass to 20 parts by mass or 0.1 part by mass to 15 parts by mass with respect to 100 parts by mass of the liquid rubber among the resin composition components.

The vulcanization accelerator may be a sulfenamide-based, guanidine-based, thiuram-based, aldehyde-amine-based, aldehyde-ammonia-based, thiazole-based, thiourea-based or dithiocarbamate-based vulcanization accelerator. Zinc oxide or stearic acid may also be used as vulcanizing aids. The amount of vulcanization accelerator is preferably 0.01 parts by mass to 20 parts by mass or 0.1 part by mass to 15 parts by mass with respect to 100 parts by mass of the liquid rubber among the resin composition components.

### [Rubber additives]

The resin composition components may also include conventional publicly known rubber additives (such as stabilizers, softening agents and aging inhibitors). Rubber stabilizers may be one or more antioxidants such as 2,6-di-tert-butyl-4-hydroxytoluene (BHT), n-octadecyl-3-(4'-hydroxy-3',5'-di-tert-butylphenyl)propionate or 2-methyl-4,6-bis[(octylthio)methyl]phenol. Rubber softening agents may be one or more process oils or extender oils. However, since the resin composition of the embodiment is able to form a flexible molded article according to one aspect, the resin composition components preferably do not include a rubber softening agent, according to that aspect.

The vulcanizing agent, vulcanization accelerator and rubber additive will typically be added during production of the resin composition, but there is no limitation to this mode of addition.

### <Additional resin composition components>

The resin composition components may further include additional components. Additional components include additional polymers, organic or inorganic fillers, heat stabilizers, antioxidants, antistatic agents and coloring agents. The content ratio of optional additional components among the resin composition components is appropriately selected in a range that does not interfere with the desired effect of the invention, and for example, it may be 0.01 to 50 mass% or 0.1 to 30 mass%.

### <Production of resin composition>

The resin composition according to one aspect can be produced by a method of mixing the composition components as a mixture comprising cellulose nanofibers, an acid-modified styrene-based elastomer and a styrene-based elastomer.

The resin composition according to another aspect can be produced by a method of mixing the composition components as a mixture comprising a cellulose nanofiber-containing tack inhibitor, and a styrene-based elastomer.

According to one aspect, the mixing is heat-kneading.

That is, the method of producing a resin composition according to one aspect comprises a kneading step in which a mixture comprising a styrene-based elastomer and cellulose nanofibers is heat-kneaded.

The weight increase rate of the cellulose nanofibers after heat-kneading with respect to the cellulose nanofibers before heat-kneading is preferably 190% to 600%. From the viewpoint of interfacial strength between the resin and cellulose nanofibers, the weight increase rate is preferably 190% or higher, 250% or higher, 300% or higher or 350% or higher, while from the viewpoint of inhibiting staple fiber formation during kneading it is preferably 600% or lower, 550% or lower or 500% or lower. The weight increase rate is the value measured by the method described herein under [Examples].

When an acid-modified styrene-based elastomer is used, the method of producing the resin composition may be:
(1) a method comprising a first step in which cellulose nanofibers and an acid-modified styrene-based elastomer are mixed to obtain a preliminary composition, and a second step in which the preliminary composition is mixed with a styrene-based elastomer to obtain a resin composition, or
(2) a method comprising a step in which the resin composition components including the cellulose nanofibers, the acid-modified styrene-based elastomer and the styrene-based elastomer are all mixed at once.

When an acid-modified styrene-based elastomer is not used, the resin composition components including the cellulose nanofibers and the styrene-based elastomer may be all mixed at once in method (2).

The mixing conditions are not particularly restricted, and for example, the components composing the resin composition may be mixed by stirring means such as a rotating/revolving mixer, planetary mixer, propeller-type stirrer, rotary stirrer, electromagnetic stirrer, open roll, Banbury mixer, kneader, single-screw extruder or twin-screw extruder, to obtain a resin composition. The stirring may be carried out with heating for efficient shearing.

Pre-combining the acid-modified styrene-based elastomer with the cellulose nanofibers in method (1) increases the opportunity for more suitable and uniform contact between the cellulose nanofibers and the styrene-based elastomer, and can improve the physical properties of the resin composition.

The cellulose nanofibers supplied for mixture with the acid-modified styrene-based elastomer or styrene-based elastomer may be in the form of a dried body comprising the cellulose nanofibers. According to one aspect, the cellulose nanofibers may be mixed with a liquid polymer and/or dispersing agent in the form of a slurry, and the liquid medium then dried off to obtain a dried body comprising the cellulose nanofibers. The drying step in this case may be carried out in the following manner, as an example.

### [Drying step]

According to one aspect, a dried body comprising the cellulose nanofibers can be produced by drying the cellulose nanofiber slurry.

The dryer used is not particularly restricted, and it may be a kneader, planetary mixer, Henschel mixer, high-speed mixer, propeller mixer, ribbon mixer, single-screw or twin-screw extruder, Banbury mixer, freeze dryer, shelf dryer, spray atomization dryer, fluidized bed dryer or drum dryer.

The drying temperature may be 20°C or higher, 30°C or higher, 40°C or higher or 50°C or higher, for example, from the viewpoint of drying efficiency, nanodispersibility of the cellulose nanofibers in the resin composition, and forming a dried body comprising cellulose nanofibers with excellent macrodispersibility and powder properties, and it may also be 200°C or lower, 180°C or lower, 160°C or lower, 140°C or lower, 120°C or lower or 100°C or lower, for example, from the viewpoint of helping to prevent heat degradation of the cellulose nanofibers and additional components, and from the viewpoint of avoiding excessive micronization of the dried body comprising the cellulose nanofibers by rapid drying of the slurry.

The drying temperature is the temperature of the heat source that is contacted with the slurry, and it is defined as the surface temperature of the temperature control jacket of the drying apparatus, the surface temperature of the heating cylinder, or the temperature of the hot air, for example.

The pressure may be atmospheric pressure or reduced pressure, but from the viewpoint of forming a dried body comprising cellulose nanofibers with powder properties for excellent drying efficiency, nanodispersibility of the cellulose nanofibers in the resin composition and excellent macrodispersibility, it may be -1 kPa or lower, -10 kPa or lower, -20 kPa or lower, -30 kPa or lower, -40 kPa or lower or -50 kPa or lower, and from the viewpoint of avoiding excessive micronization of the dried body comprising the cellulose nanofibers by rapid drying of the slurry, it may be -100 kPa or higher, -95 kPa or higher or -90 kPa or higher.

From the viewpoint of process efficiency during drying, the concentration of the cellulose nanofibers in the cellulose nanofiber slurry supplied to the drying step is preferably 1 mass% or greater, 2 mass% or greater, 3 mass% or greater, 5 mass% or greater, 10 mass% or greater, 15 mass% or greater, 20 mass% or greater or 25 mass% or greater, and from the viewpoint of avoiding excessive increase in the slurry viscosity and its solidification by aggregation in order to maintain satisfactory handleability, it is preferably 50 mass% or lower, 45 mass% or lower, 40 mass% or lower or 35 mass% or lower. Production of cellulose nanofibers is generally carried out in a dilute dispersion, for example, and the dilute dispersion can be concentrated to adjust the cellulose nanofiber concentration in the slurry to the aforementioned preferred range. A method such as suction filtration, pressure filtration, centrifugal dehydration or heating may be used for the concentration.

According to one aspect, a liquid polymer and/or a dispersing agent may be present in the dried body comprising the cellulose nanofibers, and may be added before, during and/or after drying of the cellulose nanofiber slurry.

According to another aspect, the liquid polymer and/or dispersing agent may be added in a state dispersed or dissolved in water and/or an organic solvent. There are no particular restrictions on the organic solvent, but it is preferably a solvent in which the liquid polymer and dispersing agent dissolve, and it may be a non-aqueous solvent such as chloroform, toluene, hexane or cyclohexane.

### [Liquid medium content]

The liquid medium content of the dried body comprising the cellulose nanofibers is preferably 50 mass% or lower, 40 mass% or lower, 30 mass% or lower, 20 mass% or lower or 10 mass% or lower, from the viewpoint of manageability during kneading with the acid-modified styrene-based elastomer or styrene-based elastomer. From the viewpoint of a tack-inhibiting effect, the liquid medium content is most preferably 7 mass% or lower, 5 mass% or lower or 3 mass% or lower. The liquid medium content may be 0 mass%, but from the viewpoint of facilitating production of the dried body comprising cellulose nanofibers, it may be 0.1 mass% or greater, 1 mass% or greater or 1.5 mass% or greater, for example. The liquid medium content is the value measured using an infrared heating moisture meter.

### [Mean particle size]

According to one aspect, the mean particle size of the dried body comprising the cellulose nanofibers is preferably 1 µm or larger, 10 µm or larger, 50 µm or larger, 100 µm or larger, 200 µm or larger or 500 µm or larger from the viewpoint of easier production, and preferably 10,000 µm or smaller, 5000 µm or smaller, 4000 µm or smaller, 3000 µm or smaller or 2000 µm or smaller, from the viewpoint of facilitating disintegration of the dried body comprising the cellulose nanofibers in the resin composition and allowing the cellulose nanofibers to satisfactorily disperse in the resin composition. The mean particle size is the value measured with a dynamic image analysis particle size distribution analyzer (CAMSIZER X2 by Microtrac).

### [Loose bulk density]

According to one aspect, the loose bulk density of the dried body comprising the cellulose nanofibers is preferably 0.01 g/cm³ or greater, 0.05 g/cm³ or greater, 0.10 g/cm³ or greater, 0.15 g/cm³ or greater, 0.20 g/cm³ or greater, 0.25 g/cm³ or greater, 0.30 g/cm³ or greater, 0.35 g/cm³ or greater, 0.40 g/cm³ or greater, 0.45 g/cm³ or greater or 0.50 g/cm³ or greater, from the viewpoint of a satisfactory flow property and excellent feedability of the dried body comprising the cellulose nanofibers, and also from the viewpoint of inhibiting migration of the liquid polymer and/or dispersing agent into the resin composition, while it is preferably 0.85 g/cm³ or lower, 0.80 g/cm³ or lower or 0.75 g/cm³ or lower, from the viewpoint of easy disintegration of the dried body comprising the cellulose nanofibers in the resin composition so that the cellulose nanofibers can satisfactorily disperse in the resin composition, and also from the viewpoint of avoiding excessive heaviness of the dried body comprising the cellulose nanofibers and reducing defects for the mixture of the dried body comprising the cellulose nanofibers and resin composition.

### [Packed bulk density]

According to another aspect, the packed bulk density of the dried body comprising the cellulose nanofibers is controlled within a range that is useful for keeping the loose bulk density and degree of compaction within the ranges specified by the present disclosure, and according to another aspect it is preferably 0.01 g/cm³ or greater, 0.1 g/cm³ or greater, 0.15 g/cm³ or greater, 0.2 g/cm³ or greater, 0.3 g/cm³ or greater, 0.4 g/cm³ or greater, 0.5 g/cm³ or greater or 0.6 g/cm³ or greater, and preferably 0.95 g/cm³ or lower, 0.9 g/cm³ or lower or 0.85 g/cm³ or lower.

### [Degree of compaction]

The degree of compaction is the value calculated by the formula: Degree of compaction = (packed bulk density - loose bulk density) / packed bulk density. The loose bulk density and packed bulk density are the values measured by the methods described herein under [Examples].

According to one aspect, the degree of compaction represents the extent of volume reduction. According to another aspect, the degree of compaction of the dried body comprising the cellulose nanofibers is preferably 1% or greater, 5% or greater, 10% or greater, 15% or greater, 20% or greater or 25% or greater, from the viewpoint of avoiding an excessively high flow property of the dried body comprising the cellulose nanofibers. The degree of compaction is also preferably 50% or lower, 45% or lower, 40% or lower, 35% or lower or 30% or lower, from the viewpoint of satisfactory flow properties and excellent feedability of the dried body comprising the cellulose nanofibers, and of excellent handleability (specifically, resistance to scattering, suspension or dust formation), from the viewpoint of satisfactorily dispersing the dried body comprising the cellulose nanofibers in the resin composition, and from the viewpoint of inhibiting migration of the dispersing agent into the resin.

The loose bulk density, the packed bulk density and the degree of compaction are measured using a powder tester (Model PT-X) by Hosokawa Micron Group. The number of times tapped in the packed bulk density measurement is 180.

More specific examples of steps include the following, when using an acid-modified styrene-based elastomer.
(i) Preparation of slurry comprising cellulose nanofibers and optionally a liquid polymer and/or dispersing agent → drying to prepare a dried body → preparation of preliminary composition comprising dried body and acid-modified styrene-based elastomer → preparation of resin composition comprising preliminary composition and styrene-based elastomer
(ii) Preparation of slurry comprising cellulose nanofibers and optionally a liquid polymer and/or dispersing agent → drying to prepare a dried body → preparation of preliminary composition comprising dried body, acid-modified styrene-based elastomer and styrene-based elastomer → preparation of resin composition comprising preliminary composition and styrene-based elastomer
(iii) Preparation of slurry comprising cellulose nanofibers, acid-modified styrene-based elastomer and optionally a liquid polymer and/or dispersing agent → drying to prepare a dried body → preparation of resin composition comprising dried body and styrene-based elastomer
(iv) Preparation of slurry comprising cellulose nanofibers, acid-modified styrene-based elastomer, styrene-based elastomer and optionally a liquid polymer and/or dispersing agent → drying to prepare a resin composition

Other steps include the following, for the aspect of using a tack inhibitor comprising cellulose nanofibers.
(i) Preparation of slurry comprising cellulose nanofibers and optionally a liquid polymer and/or dispersing agent → drying to prepare a dried body → preparation of preliminary composition comprising dried body and acid-modified styrene-based elastomer → preparation of resin composition comprising preliminary composition and styrene-based elastomer
(ii) Preparation of slurry comprising cellulose nanofibers and optionally a liquid polymer and/or dispersing agent → drying to prepare a dried body → preparation of preliminary composition comprising dried body, acid-modified styrene-based elastomer and styrene-based elastomer → preparation of resin composition comprising preliminary composition and styrene-based elastomer
(iii) Preparation of slurry comprising cellulose nanofibers and optionally a liquid polymer and/or dispersing agent → drying to prepare a dried body → preparation of resin composition comprising dried body, acid-modified styrene-based elastomer and styrene-based elastomer
(iv) Preparation of slurry comprising cellulose nanofibers, acid-modified styrene-based elastomer and optionally a liquid polymer and/or dispersing agent → drying to prepare a dried body → preparation of resin composition comprising dried body and styrene-based elastomer
(v) Preparation of slurry comprising cellulose nanofibers, acid-modified styrene-based elastomer, styrene-based elastomer and optionally a liquid polymer and/or dispersing agent → drying to prepare a resin composition

The resin composition may be molded into a desired shape either alone or with other components, to produce a desired molded article. The method of combining the components and the method of molding are not particularly restricted, and may be selected depending on the desired molded article. The molding will usually be melt molding, and may be carried out by injection molding, extrusion molding, extruded profile molding, blow molding or compression molding.

According to one aspect, the molding method may be profile molding. That is, according to one aspect, the resin molded body of the embodiment may be a profile molded article. One aspect of the invention provides a method of producing a profile extrusion molded article that comprises a step of profile-extruding the resin composition of the embodiment.

The profile extrusion may be accomplished by a known method. As a specific example of a profile extrusion molding method, the resin composition may be loaded into an extrusion molding machine and kneaded inside it while heating, and extruded from a profile extrusion die to obtain an uncooled resin molded body. Next, the uncooled resin molded body may be continuously guided to the cooling zone and cooled to obtain a profile extrusion molded article.

Another method is one in which melt kneading is carried out to obtain a resin composition, the die of the kneader is used for extrusion as profile extrusion die to obtain an uncooled resin molded body, and then the uncooled resin molded body is continuously guided to the cooling zone and cooled to obtain a profile extrusion molded article.

The lower limit for the extrusion temperature during profile extrusion is preferably +5°C and more preferably +10°C, with respect to the melting point when the thermoplastic resin in the resin composition is a crystalline resin, or with respect to the glass transition point when it is an amorphous resin. By controlling the lower limit to within this range it is possible to improve the productivity in profile extrusion. The upper limit for the extrusion temperature during profile extrusion is preferably +100°C, +80°C, +70°C or +60°C, with respect to the melting point when the thermoplastic resin in the resin composition is a crystalline resin, or with respect to the glass transition point when it is an amorphous resin. If the upper limit is controlled to within this range, it will be possible to inhibit deterioration of the cellulose microfibers and thus maintain the mechanical properties of the resin composition, while it will also be possible to inhibit drawdown of the resin between the profile extrusion die and the cooling zone, thus resulting in satisfactory dimensional precision for the profile extrusion molded article.

There are no particular restrictions on the cross-sectional shape of the profile extrusion molded article, but the cross-section is preferably in the shape of a sheet, pipe, tube or angle. In the case of a sheet, the sheet thickness may be 0.2 to 50 mm and the sheet width may be 10 to 1500 mm. When the shape is a pipe or tube, the thickness may be 0.1 to 30 mm and the inner diameter may be 1 to 1000 mm. In the case of angular shapes, the corner angles may be 30 to 150 degrees. The minimum curvature radius on the recess side of the corners may be 0.1 mm.

### <Forming material for 3D printing>

A preferred example of use of the resin composition of the embodiment is as a forming material for 3D printing. One aspect of the invention provides a forming material for 3D printing composed of the resin composition of the embodiment. The forming material for 3D printing may be molded into any desired form selected from among various forms such as pellets, filaments and powders. According to one aspect, the forming material for 3D printing has the form of a filament or powder.

The forming material for 3D printing of this embodiment is advantageous in helping to prevent drawdown by its own weight from the nozzle during molding into a forming material for 3D printing or during formation itself, because of its ability to reduce aggregation of the cellulose nanofibers.

A publicly known method may be used for molding of the resin composition into a forming material for 3D printing having the desired shape. A filament, for example, may be a monofilament or multifilament, but a monofilament is preferred for easier molding.

The diameter of the filamentous forming material is preferably 0.5 to 5.0 mm, more preferably 1.0 to 3.5 mm and most preferably 1.5 to 3.0 mm. The length of the filamentous forming material is preferably greater than 1 m, more preferably greater than 10 m, even more preferably greater than 100 m and most preferably greater than 300 m. By controlling the shape of the filamentous forming material within this range it is possible to select from a wide range of suitable 3D printers, and to appropriately design the forming time and the size and precision of formed articles. According to one aspect, the length of the filamentous forming material may be 20,000 m or smaller.

According to one aspect, the filamentous forming material can be produced by hot melting a resin composition and then passing it through holes such as those of a nozzle, and finally cooling and taking up the material. The diameters of the holes may be appropriately selected depending on the diameter and take-up speed of the filament, but from the viewpoint of production efficiency and yarn breakage frequency, they are preferably 0.5 to 10.0 mm, more preferably 0.8 to 5.0 mm and most preferably 1.0 to 3.0 mm. The method of cooling may be appropriately selected from among known methods such as air-cooling and water-cooling, but air-cooling is preferred from the viewpoint of preventing absorption of water due to the hydrophilicity of the cellulose nanofibers. From the viewpoint of production efficiency and yarn breakage frequency, the take-up speed of the filament is preferably 0.1 to 10 m/sec, more preferably 0.15 to 5 m/sec and most preferably 0.2 to 1 m/sec. The production apparatus for the filamentous forming material and the production apparatus for the resin composition may be the same or different.

The particle size, particle shape and aspect ratio of the powder-like forming material may be appropriately selected depending on the 3D printer used. According to one aspect, the particle sizes are preferably 1 to 10,000 µm, more preferably 10 to 500 µm and most preferably 30 to 200 µm, from the viewpoint of handling as a forming material, and surface smoothness of the formed article. The particle shapes may be spherical or amorphous, but are preferably amorphous from the viewpoint of inhibiting voids during forming. The aspect ratio is preferably 1.001 to 3.0, more preferably 1.01 to 2.0 and most preferably 1.1 to 1.8, from the viewpoint of reducing voids by reducing the gaps between particles.

According to one aspect, the powder-like forming material can be produced by pulverizing or reprecipitating the resin composition. The method of pulverizing the resin composition is not particularly restricted, and it may be wet grinding, dry grinding, low-temperature pulverizing, freeze-pulverizing or heat-pulverizing. A pulverizing medium may also be used to control the shape of the powder-like forming material.

### <Formed article>

One aspect of the invention provides a formed article obtained by forming a resin composition (for example, resin composition pellets) or a forming material for 3D printing according to the embodiment, using a 3D printer. Another aspect of the invention provides a method of producing a formed article that comprises a step of forming a resin composition or a forming material for 3D printing according to the embodiment using a 3D printer. The forming system for the 3D printer may be a fused deposition modeling system, a stereolithography system, a material injection system, a powder adhesion system or a powder bed fusion bonding system. When a filamentous forming material is used, it is preferably a fused deposition modeling system, and when a powder-like forming material is used, it is preferably a powder adhesion system or powder bed fusion bonding system.

### <Use of forming material for 3D printing and formed article>

The formed article may be applied directly for various purposes, or it may be molded into a desired shape either alone or together with other components, to produce a desired molded article. The method of combining the components and the method of molding are not particularly restricted, and may be selected depending on the desired molded article. The molding method used may be, but is not limited to, a cut molding method or foam molding method. The formed article or molded article is useful as a substitute for steel sheets, fiber-reinforced plastics (such as carbon fiber reinforced plastics and glass fiber reinforced plastics), and inorganic filler-containing resin composites. Examples of preferred uses for the forming material for 3D printing, formed article or molded article include industrial machinery parts, general machine parts, automobile/railway/vehicle/ship/aerospace-related parts, electronic and electrical components, construction and civil engineering materials, daily household items, sports and leisure goods, wind power generation case members, and container and packaging materials.

The obtained molded articles may be used for various purposes including automobile parts, electrical and electronic parts, construction materials, home-related parts, cosmetic-related parts, medical parts, rails, pipes, sashes, door frames, window frames, handrails, deck materials, fences and building materials.

Specifically, automobile parts include interior parts such as inner handles, fuel trunk openers, seat belt buckles, assist straps, switches, knobs, levers and clips, electrical system parts such as meters and connectors, in-vehicle electrical and electronic parts such as audio devices and car navigation devices, parts that contact with metals, such as carrier plates of window regulators, and mechanical parts such as door lock actuator parts, mirror parts, wiper motor system parts and fuel line parts.

Electrical and electronic components include parts or members of devices composed of resin molded bodies and having numerous metal contact points, such as audio devices, video devices, OA devices such as telephones, copy machines, facsimiles, word processors or computers, toy parts or members, and specifically chassis, gears, levers, camps, pulleys or bearings.

The molded articles can also be suitably used in a wide range of life-related parts, cosmetic-related parts and medical-related parts, including building materials or conduits such as lighting fixtures, fixtures, piping, cocks, faucets and toilet peripheral parts, fasteners, stationery, lip creams, lipstick containers, cleaners, water purifiers, spray nozzles, spray containers, aerosol containers, common containers and injection needle holders.

More preferred for use among these are gears that are to be used in high-temperature environments and subjected to high loads.

The tensile stress (modulus) of the resin composition or resin molded body at 100% elongation (M100) may be 2.0 MPa or higher, 3.0 MPa or higher or 4.0 MPa or higher according to one aspect, and 10.0 MPa or lower, 9.0 MPa or lower or 8.0 MPa or lower, according to another aspect.

The tensile stress of the resin composition or resin molded body at 300% elongation (M300) may be 3.0 MPa or higher, 5.0 MPa or higher or 6.0 MPa or higher, according to one aspect, and 20.0 MPa or lower, 15.0 MPa or lower or 13.0 MPa or lower, according to another aspect.

The ratio (M300/M100) of the tensile stress of the resin composition or resin molded body at 300% elongation (M300) with respect to the tensile stress at 100% elongation (M100) may be 1.3 or higher, 1.4 or higher or 1.5 or higher, according to one aspect, and 2.0 or lower or 1.8 or lower, according to another aspect.

The storage modulus of the resin composition or resin molded body may be 2.0 MPa or higher or 2.5 MPa or higher, according to one aspect, and 4.0 MPa or lower, 3.5 MPa or lower or 3.0 MPa or lower, according to another aspect.

The loss tangent of the resin composition or resin molded body may be 0.18 or lower, 0.15 or lower or 0.10 or lower, according to one aspect, and 0.02 or higher, 0.03 or higher or 0.04 or higher, according to another aspect.

The storage modulus and loss tangent are the values measured using a rheometer at 50°C, 10 Hz in torsion mode.

### <Resin molded body>

One aspect of the invention provides a resin molded body obtained by molding a resin composition of the embodiment. The resin molded body may have any of various shapes. The molded articles can be used for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials. Examples of such purposes include molded articles for automobile parts (for example, tires, bumpers, fenders, door panels, various moldings, emblems, engine hoods, wheel caps, roofs, spoilers, exterior parts including aero parts, and interior parts including instrument panels, console boxes and trims), battery parts (such as on-vehicle secondary battery parts, lithium ion secondary battery parts, solid methanol battery fuel cases and fuel cell tubings), electronic and electrical device parts (for example, computers and peripheral devices, junction boxes, connectors, OA devices, televisions, videos, disc players, chassis, refrigerators, air conditioners and liquid crystal projectors), daily household items (such as shoe outsoles), and vibration-proof rubber or conveyor belts.

The present disclosure further encompasses the following aspects.

### <Aspect group A>

[1] A resin composition comprising an acid-modified styrene-based elastomer, a styrene-based elastomer and cellulose nanofibers,
   wherein a total amount of the acid-modified styrene-based elastomer and the styrene-based elastomer is 60 mass% or greater in 100 mass% of the resin composition.
[2] The resin composition according to [1], wherein the acid-modified styrene-based elastomer and the styrene-based elastomer are mutually miscible.
[3] The resin composition according to [1] or [2], which comprises the acid-modified styrene-based elastomer at 0.5 parts by mass to 50 parts by mass with respect to 100 parts by mass of the styrene-based elastomer.
[4] The resin composition according to any one of [1] to [3], which comprises the styrene-based elastomer at 0.5 parts by mass to 250 parts by mass with respect to 1 part by mass of the cellulose nanofibers.
[5] The resin composition according to any one of [1] to [4], which comprises the acid-modified styrene-based elastomer at 0.5 parts by mass to 45 parts by mass with respect to 1 part by mass of the cellulose nanofibers.
[6] The resin composition according to any one of [1] to [5], which comprises the acid-modified styrene-based elastomer at 0.5 mass% to 50 mass%.
[7] The resin composition according to any one of [1] to [6], which comprises the styrene-based elastomer at 10 mass% to 98.8 mass%.
[8] The resin composition according to any one of [1] to [7], which comprises the cellulose nanofibers at 0.1 mass% to 20 mass%.
[9] The resin composition according to any one of [1] to [8], wherein a degree of acid modification of the acid-modified styrene-based elastomer is 0.2 mass% to 2.5 mass%.
[10] The resin composition according to any one of [1] to [9], wherein the styrene-based elastomer is unmodified.
[11] The resin composition according to any one of [1] to [10], wherein the acid-modified styrene-based elastomer is an acid-modified styrene-based elastomer which is an aromatic vinyl compound-conjugated diene compound block copolymer or its hydrogenated form.
[12] The resin composition according to any one of [1] to [11], wherein the styrene-based elastomer is an aromatic vinyl compound-conjugated diene compound block copolymer or its hydrogenated form.
[13] The resin composition according to any one of [1] to [12], wherein a melt mass-flow rate of the styrene-based elastomer at 230°C and 2.16 kg is 20 g/10 min or lower.
[14] The resin composition according to any one of [1] to [13], wherein a styrene unit ratio of the acid-modified styrene-based elastomer is 10 mass% to 45 mass%.
[15] The resin composition according to any one of [1] to [14], wherein a styrene unit ratio of the styrene-based elastomer is 10 mass% to 45 mass%.
[16] The resin composition according to any one of [1] to [15], wherein a ratio of a styrene unit ratio of the styrene-based elastomer with respect to a styrene unit ratio of the acid-modified styrene-based elastomer (styrene ratio of styrene-based elastomer/styrene ratio of acid-modified styrene-based elastomer) is 0.3 to 2.5.
[17] The resin composition according to any one of [1] to [16], wherein a number-average molecular weight of the acid-modified styrene-based elastomer is 10,000 to 500,000 and a number-average molecular weight of the styrene-based elastomer is 10,000 to 500,000.
[18] The resin composition according to any one of [1] to [17], wherein a ratio of the styrene unit ratio with respect to a degree of acid modification (styrene unit ratio/degree of acid modification) in the acid-modified styrene-based elastomer is 5 to 90.
[19] The resin composition according to any one of [1] to [18], wherein an amount of acid-modified groups of the acid-modified styrene-based elastomer is 0.2 mass% to 5.0 mass% with respect to 100 mass% of the cellulose nanofibers.
[20] The resin composition according to any one of [1] to [19], wherein a number-average fiber diameter of the cellulose nanofibers is 2 nm to 1000 nm.
[21] The resin composition according to any one of [1] to [20], wherein a thermal decomposition initiation temperature of the cellulose nanofibers is 250°C or higher.
[22] The resin composition according to any one of [1] to [21], wherein a specific surface area of the cellulose nanofibers is 10 m²/g to 200 m²/g.
[23] The resin composition according to any one of [1] to [22], which further comprises a polyoxyethylene unit-containing polymer.
[24] The resin composition according to any one of [1] to [23], which further comprises a liquid polymer.
[25] The method of producing the resin composition according to any one of [1] to [24], the method comprising:
   heat-kneading a mixture comprising the acid-modified styrene-based elastomer, the styrene-based elastomer and the cellulose nanofibers.
[26] A resin molded body obtained by molding the resin composition according to any one of [1] to [24].
[27] The resin molded body according to [26], which is a profile extrusion molded article.
[28] A method of producing a profile extrusion molded article,
   the method comprising a step of profile-extruding the resin composition according to any one of [1] to [24].
[29] A forming material for 3D printing, which is composed of the resin composition according to any one of [1] to [24].
[30] The forming material for 3D printing according to [29], which has a filament or powder form.
[31] A formed article obtained by forming the resin composition according to any one of [1] to [24] or a forming material for 3D printing according to [29] or [30], with a 3D printer.
[32] A method of producing a formed article,
   the method comprising a step of forming the resin composition according to any one of [1] to [24] or a forming material for 3D printing according to [29] or [30] using a 3D printer.

### <Aspect group B>

[1] A resin composition comprising a styrene-based elastomer and a tack inhibitor that comprises cellulose nanofibers.
[2] The resin composition according to [1], which comprises the styrene-based elastomer at 10 mass% or greater.
[3] The resin composition according to [1] or [2], which comprises the cellulose nanofibers at 0.1 mass% to 20 mass%.
[4] The resin composition according to any one of [1] to [3], which further comprises an acid-modified styrene-based elastomer.
[5] The resin composition according to any one of [1] to [4], wherein the styrene-based elastomer is unmodified.
[6] The resin composition according to any one of [1] to [5], which comprises the styrene-based elastomer at 0.5 parts by mass to 250 parts by mass with respect to 1 part by mass of the cellulose nanofibers.
[7] The resin composition according to any one of [1] to [6], wherein the styrene-based elastomer is an aromatic vinyl compound-conjugated diene compound block copolymer or its hydrogenated form.
[8] The resin composition according to any one of [1] to [7], wherein an MFR of the styrene-based elastomer at 230°C and 2.16 kg is 20 g/10 min or lower.
[9] The resin composition according to any one of [1] to [8], wherein a styrene unit ratio of the styrene-based elastomer is 10 mol% to 40 mol%.
[10] The resin composition according to any one of [1] to [9], wherein a number-average molecular weight of the styrene-based elastomer is 10,000 to 500,000.
[11] The resin composition according to any one of [1] to [10], wherein a number-average fiber diameter of the cellulose nanofibers is 2 nm to 1000 nm.
[12] The resin composition according to any one of [1] to [11], wherein a thermal decomposition initiation temperature of the cellulose nanofibers is 250°C or higher.
[13] The resin composition according to any one of [1] to [12], wherein a specific surface area of the cellulose nanofibers is 10 m²/g to 200 m²/g.
[14] The resin composition according to any one of [1] to [13], which further comprises a dispersing agent.
[15] The resin composition according to [14], wherein the dispersing agent is a polyoxyethylene unit-containing polymer.
[16] The resin composition according to any one of [1] to [15], which further comprises a liquid polymer.
[17] A method of producing the resin composition according to any one of [1] to [16],
   the method comprising a kneading step in which a mixture comprising a styrene-based elastomer and cellulose nanofibers is heat-kneaded.
[18] The method according to [17], wherein the cellulose nanofibers supplied to the kneading step are a dried body with a liquid medium content of 7 mass% or lower.
[19] A resin molded body obtained by molding the resin composition according to any one of [1] to [16].
[20] The resin molded body according to [19], which is a profile extrusion molded article.
[21] A method of producing a profile extrusion molded article,
   the method comprising a step of profile-extruding the resin composition according to any one of [1] to [16].
[22] A forming material for 3D printing, which is composed of the resin composition according to any one of [1] to [16].
[23] The forming material for 3D printing according to [22], which has a filament or powder form.
[24] A formed article obtained by forming the resin composition according to any one of [1] to [16] or a forming material for 3D printing according to [22] or [23], with a 3D printer.
[25] A method of producing a formed article,
   the method comprising a step of forming the resin composition according to any one of [1] to [16] or a forming material for 3D printing according to [22] or [23] using a 3D printer.

### EXAMPLES

Exemplary modes of the invention will now be further illustrated using Examples, with the understanding that the invention is not limited to these Examples.

### <Evaluation methods>

### <Acid-modified styrene-based elastomer and styrene-based elastomer>

### [Degree of acid modification (degree of maleation)]

The product catalog values were used.

### [Styrene unit ratio]

The product catalog values were used.

### [MFR at 230°C, 2.16 kg]

The product catalog values were used.

### <Liquid polymer>

### [Viscosity at 25°C]

The rubber viscosity was measured using a Brookfield viscometer.

### <Cellulose nanofibers>

The cellulose nanofibers were evaluated in the following manner.

### [Fabrication of porous sheet]

A concentrated cake was first added to tert-butanol, and dispersed with a mixer until aggregates were no longer seen. The mixture was then prepared to a concentration of 0.5 mass% for 0.5 g of cellulose nanofiber solid weight. A 100 g portion of the obtained tert-butanol dispersion was filtered on filter paper. Without being released from the filter paper, the filtered substance together with the filter paper was sandwiched by two larger filter paper sheets, and dried for 5 minutes in an oven at 150°C while pressing the edges of the larger filter paper with a weight from above. The filter paper was then released to obtain a porous sheet without distortion. Sheets with air permeability resistance up to 100 sec/100 ml per 10 g/m² basis weight of the sheet were considered to be porous sheets, and were used as measuring samples.

After measuring the basis weight W (g/m²) of each sample that had been left to stand for 1 day in an environment of 23°C, 50% RH, an Oken-type air permeability resistance tester (Model EG01 by Asahi Seiko Co., Ltd.) was used to measure the air permeability resistance R (sec/100 ml). The value per 10 g/m² basis weight was calculated by the following formula. $Air permeability resistance \left(sec/100 ml\right) per 10 {g / m}^{2} basis weight = R / W \times 10$

### [Weight-average molecular weight (Mw), number-average molecular weight (Mn) and Mw/Mn ratio]

After weighing out 0.88 g of the porous sheet and chopping it into small pieces with scissors, the pieces were gently stirred and allowed to stand for one day after addition of 20 mL of purified water. The water and solid portion were separated by centrifugation. After then adding 20 mL of acetone, the mixture was gently stirred and allowed to stand for 1 day. The acetone and solid portion were separated by centrifugation. After then adding 20 mL of N,N-dimethylacetamide, the mixture was gently stirred and allowed to stand for 1 day. Centrifugal separation was again carried out to separate the N,N-dimethylacetamide and solid portion, and then 20 mL of N,N-dimethylacetamide was added and the mixture was gently stirred and allowed to stand for 1 day. The N,N-dimethylacetamide and solid portion were separated by centrifugation, 19.2 g of a N,N-dimethylacetamide solution prepared to a lithium chloride content of 8 mass% was added to the solid portion, and the mixture was stirred with a stirrer while visually confirming dissolution. The cellulose nanofiber-dissolved solution was filtered with a 0.45 µm filter, and the filtrate was supplied as a sample for gel permeation chromatography. The apparatus and measuring conditions used were as follows.
Apparatus: Tosoh Corp. HLC-8120
Column: TSKgel SuperAWM-H (6.0 mm I.D. × 15 cm) × 2
Detector: RI detector
Eluent: N,N-dimethylacetamide (lithium chloride: 0.2%)
Flow speed: 0.6 mL/min
Calibration curve: Based on pullulan

### [Average content of alkali-soluble polysaccharides]

The alkali-soluble polysaccharide content was determined by a method described in non-patent literature for cellulose nanofibers (Mokushitsu Kagaku Jikken Manual, ed. The Japan Wood Research Society, pp.92-97, 2000), subtracting the α-cellulose content from the holocellulose content (Wise method). The alkali-soluble polysaccharide content was calculated three times for each sample, and the number average for the calculated alkali-soluble polysaccharide contents was recorded as the average alkali-soluble polysaccharide content of the cellulose nanofibers.

### [Average content of acid-insoluble components]

The acid-insoluble component was quantified by the Klason method, described in non-patent literature for cellulose nanofibers (Mokushitsu Kagaku Jikken Manual, ed. The Japan Wood Research Society, pp.92-97, 2000). Absolutely dried cellulose nanofibers were weighed and placed in a predetermined container, 72 mass% concentrated sulfuric acid was added, and the mixture was sufficiently pressed with a glass rod until the contents became uniform, after which it was autoclaved to dissolve the cellulose and hemicellulose in the acid solution. After standing to cool, the contents were filtered with glass fiber filter paper to obtain the acid-insoluble components as residue. The acid-insoluble component content was calculated from the weight of the acid-insoluble components, and the number-average of the acid-insoluble component contents calculated for three samples was recorded as the average content of the acid-insoluble components.

### [Degree of crystallinity]

The porous sheet was measured by X-ray diffraction and the degree of crystallinity was calculated by the following formula. $Degree of crystallinity \left(%\right) = \left[{I}_{\left(200\right)}-{I}_{\left(amorphous\right)}\right] / {I}_{\left(200\right)} \times 100$
I₍₂₀₀₎: Diffraction peak intensity at 200 plane (2θ = 22.5°) for type I cellulose crystal
I₍ₐₘₒᵣₚₕₒᵤₛ₎: Amorphous halo peak intensity for type I cellulose crystal, peak intensity at angle of 4.5° lower than diffraction angle at 200 plane (2θ = 18.0°).

### (X-ray diffraction measuring conditions)

Apparatus: MiniFlex (Rigaku Corp.)
Operating shaft: 2θ/θ
Source: CuKα
Measuring method: Continuous
Voltage: 40 kV
Current: 15 mA
Initial angle: 2θ = 5°
Final angle: 2θ = 30°
Sampling width: 0.020°
Scan speed: 2.0°/min
Sample: Porous sheet attached to specimen holder.

### [Number-average fiber diameter]

The concentrated cake was diluted with tert-butanol to 0.01 mass% and dispersed using a high-shear homogenizer ("ULTRA-TURRAX T18", trade name of IKA Corp.) with treatment conditions of 15,000 rpm × 3 min, cast onto an osmium-vapor deposited silicon substrate and air-dried, and then measured with a high-resolution scanning electron microscope (Regulus 8220 by Hitachi High-Technologies Corp.). The measurement was carried out with adjustment of the magnification so that at least 100 cellulose nanofibers were observable, the diameters (D) of 100 randomly selected cellulose nanofibers were measured, and the added average for the 100 cellulose nanofibers was calculated as the number-average fiber diameter.

### [Aspect ratio]

The number-average fiber length L, number-average fiber diameter D and number-average aspect ratio (L/D) of the cellulose nanofibers in the resin composition are the values measured by the following procedure using an optical microscope. A resin composition prepared by heat-kneading the resin and cellulose nanofibers was used as a measuring sample, and the cellulose nanofibers in the resin were measured with an optical microscope while heating at 220°C with a hot stage. Specifically, the lengths and diameters of 200 randomly selected cellulose nanofibers were measured and their ratio was calculated. The number-average values were recorded as the number-average fiber length L and number-average fiber diameter D, and the number-average aspect ratio (L/D) was calculated.

### [Specific surface area]

The BET specific surface area (m²/g) was calculated with the program of a specific surface area/pore distribution measuring apparatus (Nova-4200e, by Quantachrome Instruments), after drying approximately 0.2 g of the porous sheet for 5 hours in a vacuum at 120°C and measuring the nitrogen gas adsorption at the boiling point of liquid nitrogen at five points (multipoint method) in a relative vapor pressure (P/P₀) range of 0.05 to 0.2.

### [Thermal decomposition initiation temperature (T_{D})]

Thermal analysis of the porous sheet was conducted by the following method.
Apparatus: Thermo plus EVO2 by Rigaku
Sample: Circular pieces cut out from the porous sheet were placed and stacked in an aluminum sample pan, in an amount of 10 mg.
Sample weight: 10 mg
Measuring conditions: Temperature increase from room temperature to 150°C at a temperature-elevating rate of 10°C/min, in a nitrogen flow of 100 ml/min, and holding at 150°C for 1 hour, followed by temperature increase to 450°C at 10°C/min.
T_{D} calculation method: Calculation was from a graph with temperature on the abscissa and weight retention% on the ordinate. Starting from the weight of the porous sheet at 150°C (with essentially all of the moisture content removed) (a weight loss of 0 wt%) and increasing the temperature, a straight line was obtained running through the temperature at 1 wt% weight loss and the temperature at 2 wt% weight loss. The temperature at the point of intersection between this straight line and a horizontal (baseline) running through the origin at weight loss 0 wt%, was recorded as the thermal decomposition initiation temperature (T_{D}).

### [1 wt% weight loss temperature]

The temperature at 1 wt% weight loss used for T_{D} calculation was recorded as the 1 wt% weight loss temperature.

### [250°C Weight loss]

Apparatus: Thermo plus EVO2 by Rigaku
Sample: Circular pieces cut out from the porous sheet were placed and stacked in an aluminum sample pan, in an amount of 10 mg.
Sample weight: 10 mg
Measuring conditions: Temperature increase from room temperature to 150°C at a temperature-elevating rate of 10°C/min, in a nitrogen flow of 100 ml/min, and holding at 150°C for 1 hour, followed by temperature increase from 150°C to 250°C at 10°C/min and holding at 250°C for 2 hours. Calculation was by the following formula using the weight WO upon reaching 250°C and the weight W1 after holding at 250°C for 2 hours. $250 ° C weight loss \left(%\right) : \left(W0-W1\right) / \left.W0\right\} \times 100$

### [Weight increase of cellulose nanofibers separated from resin composition using THF]

Separation of the cellulose nanofibers from the resin composition can be easily accomplished by a method known to those skilled in the art. The separation was carried out by the following method. An approximately 1.5 g of fragment of the resin composition was dissolved in 70 ml of THF and separated into a soluble portion (resin) and insoluble portion (resin adsorbed onto cellulose nanofibers and fiber surfaces). After filtering the insoluble portion with filter paper, it was dried for 3 hours at 80°C in a vacuum dryer and concentrated, and the insoluble weight was measured. The weight increase of the cellulose nanofibers was calculated by the following formula. The theoretical weight is the prepared weight of the cellulose nanofibers. 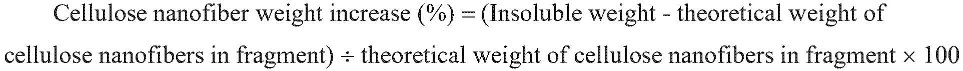 Cellulose nanofiber weight increase (%) = (Insoluble weight - theoretical weight of cellulose nanofibers in fragment) ÷ theoretical weight of cellulose nanofibers in fragment × 100

### <Resin composition>

### [Degree of whitening at breakage (void volume)]

A test piece subjected to the tensile test method of JIS K-6251 was used for cross-sectional observation by X-ray CT in the MD/TD direction at the location of breakage (ND direction: 2 mm × TD direction: 3 mm × MD direction: 4 mm).
Apparatus: X-CT Skyscan1272 by Bruker Corp.
<Conditions> Tube voltage: 40 kV, tube current: 100 µA, pixel count: 2k (2452 × 1640 pix), pixel resolution: 2.4 µm, number of scans: 4, scan increment: 0.4°, analysis processing: smoothing (Kuwahara filter: 2 pix).
The observation image was then binarized, the void sections were extracted, and the percentage (%) of the total volume of voids per unit volume was digitized.

### (Binarization conditions for void sections)

Binarization 0-35 (global range: 0-255), object with ≤4 voxels removed, objects with sizes of ≥50 pixels in xy cross-section considered to be contaminants or their artifacts, and removed.

### (Evaluation scale)

Poor: ≥1%
Fair: ≥0.5% and <1%
Good: ≥0.02 and <0.5%
Excellent: <0.02%

### [Tensile stress at 400% strain, tensile modulus at 50 to 100% strain, maximum tensile stress and strain]

Using the tensile test method of JIS K-6251, the tensile strength, the tensile stress at 50% elongation (50% modulus), the tensile stress at 100% elongation (100% modulus) and the tensile stress at 400% elongation (400% modulus were measured, and the tensile stress at 400% strain, the tensile modulus at 50 to 100% strain (the value of the increase of 100% modulus with respect to the 50% modulus, divided by the strain increment (100% to 50%)), the maximum tensile stress and the strain at fracture were determined.

### [Colorability]

The color of a molded dumbbell was visually evaluated.

### (Evaluation scale)

Poor: Caramel color
Fair: Light caramel color
Good: Milky white color
Excellent: White or transparent

### [Strand surface fuzzing]

The surface condition of an extrusion-molded strand was visually evaluated.

### (Evaluation scale)

Poor: Surface condition with no smooth sections, severe surface irregularities
Fair: Surface condition with some smooth sections and some surface irregularities
Good: Surface condition with slight fuzzing visible on surface
Excellent: Surface condition with absolutely no fuzzing

### [Tackiness]

The tack strength was measured using a TAC-II Tacking Tester by Rhesca Corp. For the measuring mode, the probe was pushed up to the set pressurization value and a continuously controlled constant load was used to maintain the pressurization value until a set time period elapsed.

Specifically, a stainless steel probe having a flat surface with an area of 19.625 mm² was contacted with the surface of the measuring sample, using the flat surface of the probe, under conditions with a probe traveling speed of 120 mm/min, an applied pressure (load) of 600 gf and a pressing time of 60 seconds, and the tack peak value on the surface of the resin composition was measured 10 times in a probe tack test, pulling upward under conditions with a probe traveling speed (pulling speed) of 600 mm/min, and dividing the average value for the 10 measurements by the area of the probe flat surface, as the tack strength. The measurement was carried out at 23°C.

### [Tensile stress at 400% strain, maximum tensile stress and strain]

An ISO 37 type 3 test piece was used for a tensile test at a pull rate of 5 mm/min in an environment with a temperature of 23°C and a relative humidity of 50%. The arithmetic mean was calculated for 5 data points for tensile stress at 400% strain, maximum tensile stress and strain at fracture.

### <Materials>

### <Styrene-based elastomer>

SEBS, TUFTEC H1062 by Asahi Kasei Corp., MFR: 4.1 g/10 min (230°C, 2.16 kg)

### <Acid-modified styrene-based elastomer>

Acid-modified styrene-based elastomer 1: Maleic acid-modified SEBS, TUFTEC M1943 by Asahi Kasei Corp., MFR: 6.5 g/10 min (230°C, 2.16 kg)
Acid-modified styrene-based elastomer 2: Maleic acid-modified SEBS, TUFTEC M1913 by Asahi Kasei Corp., MFR: 6.5 g/10 min (230°C, 2.16 kg)
Acid-modified styrene-based elastomer 3: Maleic acid-modified SEBS, TUFTEC M1911 by Asahi Kasei Corp., MFR: 4.2 g/10 min (230°C, 2.16 kg)

### <Cellulose nanofibers (unmodified CNF)>

After immersing 3 parts by mass of cotton linter pulp in 27 parts by mass of water, the mixture was dispersed with a pulper. Next, 170 parts by mass of water was added to 30 parts by mass of the pulper-processed cotton linter pulp slurry (of which 3 parts by mass was cotton linter pulp), dispersing the latter in the water (1.5 mass% solid content), and a Model SDR14 Lab Refiner (pressurized DISK type) by Aikawa Iron Works Co. was used as a disc refiner apparatus for beating treatment of the aqueous dispersion for 30 minutes with a disc clearance of 1 mm. This was followed by thorough beating under conditions with clearance reduced to a level of near zero, to obtain a beaten aqueous dispersion (solid concentration: 1.5 mass%). The obtained beaten aqueous dispersion was directly subjected to micronization treatment 10 times using a high-pressure homogenizer (NSO15H by Niro Soavi) at an operating pressure of 100 MPa, to obtain a cellulose nanofiber slurry (solid concentration: 1.5 mass%). The mixture was then concentrated to a solid content of 10 mass% using a dehydrator, to obtain a cellulose nanofiber cake. The properties of the cellulose nanofibers were as follows.
Weight-average molecular weight (Mw): 380,000
Number-average molecular weight (Mn): 80,000
Average content of alkali-soluble polysaccharides: 3.8%
Average content of acid-insoluble component: 3.1%
Degree of crystallinity = 85%
Number-average fiber diameter: 75 nm
Specific surface area: 34 m²/g
Thermal decomposition initiation temperature (T_{D}): 283°C
1 wt% weight loss temperature: 297°C
250°C weight loss: 2.8%

### <Dispersing agent>

Polyethylene glycol: PEG6000, Sanyo Chemical Industries, Ltd.

### <Liquid polymer>

Liquid polybutadiene: RICON 184 by Clay Valley Co., 25°C viscosity: 75,000 mPa·s

### <Production of resin composition>

### <Example 1>

Cellulose nanofiber cake, RICON 184 and PEG6000 were combined in a proportion of 7:4:3 as solid weight, and the pressure was reduced to -90 kPa with a vacuum pump while stirring a planetary mixer (Model ACM-5LVT: paddle type) by Kodaira Seisakusho Co., Ltd., under conditions with a jacket temperature of 80°C, 307 rpm. The product was dried under reduced pressure until the product temperature reached 70°C, to obtain cellulose nanofiber powder. The obtained cellulose nanofiber powder, SEBS and acid-modified styrene-based elastomer 1 were combined as the composition listed in Table 1, melted for 5 minutes using a batch biaxial kneader (Explore by DSM) under conditions of 200°C, 200 rpm, and a special benchtop injection molding machine (by DSM) was used to fabricate a test piece (ISO 37 type 3) at a die temperature of 80°C.

### <Examples 2 to 11 and Comparative Examples 1 to 3>

A resin composition was obtained in the same manner as Example 1, except that the content was changed as shown in Table 1.

**[Table 1]**

| | | Units | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 | Comp. Ex. 3 |
|---|---|---|---|---|---|---|---|---|---|---|---|---|---|---|---|---|
| Content | Styrene-based elastomer | pts by mass | 85 | 80 | 70 | 85 | 80 | 70 | 70 | 35 | 89.5 | 89 | 89.5 | 100 | 90 | 40 |
| | Acid-modified styrene-based elastomer 1 M1943 | pts by mass | 5 | 10 | 20 | | | | | | 0.5 | 1 | | | | 10 |
| | Acid-modified styrene-based elastomer 2 M1913 | pts by mass | | | | 5 | 10 | 20 | | | | | 0.5 | | | |
| | Acid-modified styrene-based elastomer 3M1911 | pts by mass | | | | | | | 20 | 55 | | | | | | |
| | CNF | pts by mass | 5 | 5 | 5 | 5 | 5 | 5 | 5 | 5 | 5 | 5 | 5 | | 5 | 25 |
| | Liquid rubber | pts by mass | 2.9 | 2.9 | 2.9 | 2.9 | 2.9 | 2.9 | 2.9 | 2.9 | 2.9 | 2.9 | 2.9 | | 2.9 | 14.5 |
| | Dispersing agent | pts by mass | 2.1 | 2.1 | 2.1 | 2.1 | 2.1 | 2.1 | 2.1 | 2.1 | 2.1 | 2.1 | 2.1 | | 2.1 | 10.5 |
| | Total | pts by mass | 100 | 100 | 100 | 100 | 100 | 100 | 100 | 100 | 100 | 100 | 100 | 100 | 100 | 100 |
| Total amount of styrene-based elastomer and acid-modified styrene-based elastomer in resin composition | | mass% | 90 | 90 | 90 | 90 | 90 | 90 | 90 | 90 | 90 | 90 | 90 | 100 | 90 | 50 |
| Amount of acid-modified styrene-based elastomer with respect to 100 parts by mass of styrene-based elastomer | | pts by mass | 5.9 | 12.5 | 28.6 | 5.9 | 12.5 | 28.6 | 28.6 | 157.1 | 0.6 | 1.1 | 0.6 | 0.0 | 0.0 | 25.0 |
| Styrene-based elastomer amount with respect to 1 part by mass CNF | | pts by mass | 17.0 | 16.0 | 14.0 | 17.0 | 16.0 | 14.0 | 14.0 | 7.0 | 17.9 | 17.8 | 17.9 | - | 18.0 | 1.6 |
| Acid-modified styrene-based elastomer amount with respect to 1 part by mass CNF | | pts by mass | 1.0 | 2.0 | 4.0 | 1.0 | 2.0 | 4.0 | 4.0 | 11.0 | 0.1 | 0.2 | 0.1 | - | - | 0.4 |
| (1) Styrene unit ratio of styrene-based elastomer | | mass% | 18 | 18 | 18 | 18 | 18 | 18 | 18 | 18 | 18 | 18 | 18 | 18 | 18 | 18 |
| (2) Styrene unit ratio of acid-modified styrene-based elastomer | | mass% | 20 | 20 | 20 | 29 | 29 | 29 | 31 | 31 | 20 | 20 | 29 | - | - | 20 |
| (1)/(2) | | - | 0.9 | 0.9 | 0.9 | 0.6 | 0.6 | 0.6 | 0.6 | 0.6 | 0.9 | 0.9 | 0.6 | - | - | 0.9 |
| (3) Degree of acid modification of acid-modified styrene-based elastomer | | mass% | 1.8 | 1.8 | 1.8 | 1.8 | 1.8 | 1.8 | 0.4 | 0.4 | 1.8 | 1.8 | 1.8 | - | - | 1.8 |
| (2)/(3) | | - | 11.1 | 11.1 | 11.1 | 16.1 | 16.1 | 16.1 | 77.5 | 77.5 | 11.1 | 11.1 | 16.1 | - | - | 11.1 |
| Amount of acid-modified groups of acid-modified styrene-based elastomer with respect to 100 mass% CNF | | mass% | 1.80 | 3.60 | 7.20 | 1.80 | 3.60 | 7.20 | 1.60 | 4.40 | 0.18 | 0.36 | 0.18 | - | - | 0.72 |
| Evaluation | Weight increase rate | % | 355 | 423 | 470 | 375 | 451 | 496 | 355 | - | - | - | - | - | 185 | - |
| | Minimum aspect ratio of CNF in resin | - | 4 | 4 | 4 | 5 | 4 | 4 | 5 | - | - | - | - | - | 3 | 2 |
| | Maximum aspect ratio of CNF in resin | - | 89 | 51 | 40 | 103 | 71 | 58 | 45 | - | - | - | - | - | 102 | 32 |
| | Number-average aspect ratio of CNF in resin | - | 19 | 18 | 16 | 22 | 20 | 19 | 24 | - | - | - | - | - | 27 | 12 |
| | Number-average fiber diameter of CNF in resin | µm | 6.9 | 6.6 | 6.5 | 6.8 | 6.8 | 6.7 | 6.8 | - | - | - | - | - | 6.8 | 6.4 |
| | Number-average fiber length of CNF in resin | µm | 45 | 40 | 40 | 55 | 52 | 45 | 57 | - | - | - | - | - | 63 | 39 |
| | Degree of whitening at breakage (void volume) | - | Good | Excel. | Excel. | Good | Excel. | Excel. | Good | Excel. | Fair | Fair | Fair | Excel. | Poor | Poor |
| | Tensile stress at 400% strain | MPa | 6.7 | 8.1 | 7.8 | 7.9 | 8.7 | 9.3 | 8.2 | 10 | 6.2 | 6.3 | 6.3 | 4.7 | 6.0 | - |
| | Tensile modulus at 50%-100% strain | MPa | 1.77 | 1.83 | 1.51 | 1.56 | 2.05 | 1.9 | 1.8 | 2.2 | 0.15 | 0.18 | 0.16 | 0.81 | 0.04 | - |
| | Colorability | - | Excel. | Good | Good | Excel. | Good | Good | Excel. | Good | Fair | Fair | Fair | Excel. | Poor | Poor |
| | Surface fuzzing of strands | - | Excel. | Excel. | Excel. | Excel. | Excel. | Excel. | Excel. | Excel. | Good | Good | Good | Poor | Fair | Poor |
| | Maximum tensile stress | MPa | 9.4 | 9.7 | 11.4 | 9.0 | 8.8 | 12.7 | 9.1 | 11 | 10.3 | 10.4 | 10.5 | 9.0 | 10.6 | 9.2 |
| | Strain | % | 572.1 | 490.7 | 585.1 | 460.4 | 408.9 | 549.8 | 450 | 420 | 568.3 | 570.7 | 572.1 | 559.6 | 573.7 | 35 |

### INDUSTRIAL APPLICABILITY

The resin composition of the disclosure allows molded articles with satisfactory physical properties to be formed, and it can therefore be suitably applied for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials.

## Claims

1. A resin composition comprising a thermoplastic elastomer and cellulose nanofibers, wherein:
the thermoplastic elastomer comprises an acid-modified styrene-based elastomer and a styrene-based elastomer, and
an amount of the thermoplastic elastomer is 60 mass% or greater in 100 mass% of the resin composition.

2. A resin composition comprising a thermoplastic elastomer and cellulose nanofibers, wherein:
a number-average aspect ratio, as a ratio L/D of a number-average fiber length L and a number-average fiber diameter D of the cellulose nanofibers in the resin composition, is 2 to 26, and
an amount of the thermoplastic elastomer is 60 mass% or greater in 100 mass% of the resin composition.

3. A resin composition comprising a thermoplastic elastomer and cellulose nanofibers,
wherein
when the cellulose nanofibers are separated from the resin composition using tetrahydrofuran (THF), an weight increase rate of the cellulose nanofibers is 190% to 600%, and
an amount of the thermoplastic elastomer is 60 mass% or greater in 100 mass% of the resin composition.

4. The resin composition according to any one of claims 1 to 3, wherein:
the resin composition comprises an acid-modified styrene-based elastomer and a styrene-based elastomer as the thermoplastic elastomer, and
a total amount of the acid-modified styrene-based elastomer and the styrene-based elastomer is 60 mass% or greater in 100 mass% of the resin composition.

5. The resin composition according to any one of claims 1 to 3, wherein:
the resin composition comprises an acid-modified styrene-based elastomer and a styrene-based elastomer as the thermoplastic elastomer, and
the acid-modified styrene-based elastomer and the styrene-based elastomer are mutually miscible.

6. The resin composition according to any one of claims 1 to 3, wherein:
the resin composition comprises an acid-modified styrene-based elastomer and a styrene-based elastomer as the thermoplastic elastomer, and
an amount of the acid-modified styrene-based elastomer is 0.5 parts by mass to 50 parts by mass with respect to 100 parts by mass of the styrene-based elastomer.

7. The resin composition according to any one of claims 1 to 3, wherein:
the resin composition comprises a styrene-based elastomer as the thermoplastic elastomer, and
an amount of the styrene-based elastomer is 0.5 parts by mass to 250 parts by mass with respect to 1 part by mass of the cellulose nanofibers.

8. The resin composition according to any one of claims 1 to 3, wherein:
the resin composition comprises an acid-modified styrene-based elastomer as the thermoplastic elastomer, and
an amount of the acid-modified styrene-based elastomer is 0.5 parts by mass to 45 parts by mass with respect to 1 part by mass of the cellulose nanofibers.

9. The resin composition according to any one of claims 1 to 3, wherein:
the resin composition comprises an acid-modified styrene-based elastomer as the thermoplastic elastomer, and
an amount of the acid-modified styrene-based elastomer is 0.5 mass% to 50 mass% in 100 mass% of the resin composition.

10. The resin composition according to any one of claims 1 to 3, wherein:
the resin composition comprises a styrene-based elastomer as the thermoplastic elastomer, and
an amount of the styrene-based elastomer is 10 mass% to 98.8 mass% in 100 mass% of the resin composition.

11. The resin composition according to any one of claims 1 to 3, which comprises the cellulose nanofibers at 0.1 mass% to 20 mass%.

12. The resin composition according to any one of claims 1 to 3, wherein:
the resin composition comprises an acid-modified styrene-based elastomer as the thermoplastic elastomer, and
a degree of acid modification of the acid-modified styrene-based elastomer is 0.2 mass% to 2.5 mass%.

13. The resin composition according to any one of claims 1 to 3, wherein:
the resin composition comprises a styrene-based elastomer as the thermoplastic elastomer, and
the styrene-based elastomer is unmodified.

14. The resin composition according to any one of claims 1 to 3, wherein:
the resin composition comprises an acid-modified styrene-based elastomer as the thermoplastic elastomer, and
the acid-modified styrene-based elastomer is an acid-modified form of a styrene-based elastomer which is an aromatic vinyl compound-conjugated diene compound block copolymer or its hydrogenated form.

15. The resin composition according to any one of claims 1 to 3, wherein:
the resin composition comprises a styrene-based elastomer as the thermoplastic elastomer, and
the styrene-based elastomer is an aromatic vinyl compound-conjugated diene compound block copolymer or its hydrogenated form.

16. The resin composition according to any one of claims 1 to 3, wherein:
the resin composition comprises a styrene-based elastomer as the thermoplastic elastomer, and
a melt mass-flow rate of the styrene-based elastomer at 230°C, 2.16 kg is 20 g/10 min or lower.

17. The resin composition according to any one of claims 1 to 3, wherein:
the resin composition comprises an acid-modified styrene-based elastomer as the thermoplastic elastomer, and
a styrene unit ratio of the acid-modified styrene-based elastomer is 10 mass% to 45 mass%.

18. The resin composition according to any one of claims 1 to 3, wherein:
the resin composition comprises a styrene-based elastomer as the thermoplastic elastomer, and
a styrene unit ratio of the styrene-based elastomer is 10 mass% to 45 mass%.

19. The resin composition according to any one of claims 1 to 3, wherein:
the resin composition comprises an acid-modified styrene-based elastomer and a styrene-based elastomer as the thermoplastic elastomer, and
a ratio of a styrene unit ratio of the styrene-based elastomer with respect to a styrene unit ratio of the acid-modified styrene-based elastomer (styrene ratio of styrene-based elastomer/styrene ratio of acid-modified styrene-based elastomer) is 0.3 to 2.5.

20. The resin composition according to any one of claims 1 to 3, wherein:
the resin composition comprises an acid-modified styrene-based elastomer and a styrene-based elastomer as the thermoplastic elastomer, and
a number-average molecular weight of the acid-modified styrene-based elastomer is 10,000 to 500,000, and a number-average molecular weight of the styrene-based elastomer is 10,000 to 500,000.

21. The resin composition according to any one of claims 1 to 3, wherein:
the resin composition comprises an acid-modified styrene-based elastomer as the thermoplastic elastomer, and
a ratio of a styrene unit ratio with respect to a degree of acid modification (styrene unit ratio/degree of acid modification) for the acid-modified styrene-based elastomer is 5 to 90.

22. The resin composition according to any one of claims 1 to 3, wherein:
the resin composition comprises an acid-modified styrene-based elastomer as the thermoplastic elastomer, and
an amount of acid-modified groups of the acid-modified styrene-based elastomer is 0.2 mass% to 5.0 mass% with respect to 100 mass% of the cellulose nanofibers.

23. The resin composition according to any one of claims 1 to 3, wherein a number-average fiber diameter of the cellulose nanofibers is 2 nm to 1000 nm.

24. The resin composition according to any one of claims 1 to 3, wherein a thermal decomposition initiation temperature of the cellulose nanofibers is 250°C or higher.

25. The resin composition according to any one of claims 1 to 3, wherein a specific surface area of the cellulose nanofibers is 10 m²/g to 200 m²/g.

26. The resin composition according to any one of claims 1 to 3, which further comprises a polyoxyethylene unit-containing polymer.

27. The resin composition according to any one of claims 1 to 3, which further comprises a liquid polymer.

28. A method of producing the resin composition according to any one of claims 1 to 3, wherein:
the resin composition comprises an acid-modified styrene-based elastomer and a styrene-based elastomer as the thermoplastic elastomer, and
the method comprises heat-kneading a mixture comprising the acid-modified styrene-based elastomer, the styrene-based elastomer and the cellulose nanofibers.

29. The method according to claim 28, wherein an weight increase rate of the cellulose nanofibers after heat-kneading with respect to the cellulose nanofibers before heat-kneading is 190% to 600%.

30. A resin molded body obtained by molding the resin composition according to any one of claims 1 to 3.

31. The resin molded body according to claim 30, which is a profile extrusion molded article.

32. A method of producing a profile extrusion molded article,
the method comprising a step of profile-extruding the resin composition according to any one of claims 1 to 3.

33. A forming material for 3D printing, which is composed of the resin composition according to any one of claims 1 to 3.

34. The forming material for 3D printing according to claim 33, which has a filament or powder form.

35. A formed article obtained by forming the resin composition according to any one of claims 1 to 3 using a 3D printer.

36. A formed article obtained by forming the forming material for 3D printing according to claim 33 using a 3D printer.

37. A method of producing a formed article,
the method comprising a step of forming the resin composition according to any one of claims 1 to 3 using a 3D printer.

38. A method of producing a formed article,
the method comprising a step of forming the forming material for 3D printing according to claim 33 using a 3D printer.

39. A resin composition comprising a styrene-based elastomer and a tack inhibitor that comprises cellulose nanofibers.
